(19) Europäisches Patentamt
European Patent Office
Office européen des brevets

(11) EP 2 752 444 B1

(12) **EUROPEAN PATENT SPECIFICATION**

(45) Date of publication and mention of the grant of the patent:
**29.04.2020 Bulletin 2020/18**

(21) Application number: **12827544.3**

(22) Date of filing: **30.08.2012**

(51) Int Cl.:
***C08J 9/04*** *(2006.01)* ***B29C 45/00*** *(2006.01)*
***B29K 69/00*** *(2006.01)* ***B29K 105/04*** *(2006.01)*

(86) International application number:
**PCT/JP2012/072072**

(87) International publication number:
**WO 2013/031924 (07.03.2013 Gazette 2013/10)**

(54) **METHOD FOR PRODUCING A FOAM MOLDED BODY**

VERFAHREN ZUR HERSTELLUNGS EINES SCHAUMFORMKÖRPERS

PROCÉDÉ DE FABRICATION D'UN CORPS MOULÉ EN MOUSSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2011 JP 2011189681**
**26.10.2011 JP 2011235371**
**28.10.2011 JP 2011236746**

(43) Date of publication of application:
**09.07.2014 Bulletin 2014/28**

(73) Proprietor: **Mitsubishi Chemical Corporation**
**Tokyo 100-8251 (JP)**

(72) Inventors:
- **TAKASHIMA, Toru**
**Mie 510-8530 (JP)**
- **YAMAOKA Katsushi**
**Mie 510-8530 (JP)**
- **ISHIKAWA Takeshi**
**Aichi 440-8601 (JP)**

(74) Representative: **Vossius & Partner**
**Patentanwälte Rechtsanwälte mbB**
**Siebertstrasse 3**
**81675 München (DE)**

(56) References cited:
**EP-A2- 1 166 991**
**WO-A1-2005/023918**
**WO-A1-2011/096089**
**JP-A- H0 680 813**
**JP-A- 2000 103 960**
**JP-A- 2001 139 711**
**JP-A- 2002 192 549**
**JP-A- 2009 000 964**
**JP-A- 2009 161 746**
**JP-A- 2011 070 019**
**JP-A- 2011 500 912**
**JP-A- 2011 500 925**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 752 444 B1

## Description

### Technical Field

The present invention relates to a method for producing a molded body by foaming a polycarbonate copolymer.

### Background Art

A polycarbonate resin is generally produced using a raw material derived from petroleum resources, but in recent years, depletion of petroleum resources is feared, and it is demanded to provide a polycarbonate resin using a raw material obtained from biomass resources such as plants. In addition, since global warming due to increase or accumulation of carbon dioxide emissions brings about climate change, there is a demand to develop a polycarbonate resin using, as a raw material, a plant-derived monomer that is carbon neutral even when discarded after use.

Under these circumstances, for example, a technique of using isosorbide as a plant-derived monomer and obtaining a polycarbonate through a transesterification reaction with diphenyl carbonate has been proposed (see, for example, Patent Document 1). Also, the polycarbonate resin containing isosorbide as a raw material is excellent in the mechanical properties and at the same time, has heat resistance and therefore, its use for application in an industrial material such as automobile parts has been proposed (see, for example, Patent Document 2).

On the other hand, a molded body obtained by foaming a polymer (foam-molded body) is a lightweight structure excellent in heat insulation and shock absorption and is used as various kinds of materials by making use of its properties. Here, Patent Document 3 discloses a foam-molded article obtained by foam-molding a polycarbonate resin using isosorbide as a raw material (isosorbide homopolymer) under specific conditions. Also, Patent Document 4 discloses Comparative Example using a polycarbonate resin having dissolved therein carbon dioxide.
Patent Document 5 discloses a reflective material made of a resin composition consisting essentially of polycarbonate having a specified structure, an organic filler and/or an inorganic filler, and fine cavities whose porosity is in the range from 5 to 70% are included inside the reflective material.

Patent Document 6 discloses a foamed material having an average cell diameter of ≤ 100 μm produced by foaming a high-molecular weight polycarbonate resin having a weight-average molecular weight of 40,000-300,000 using carbon dioxide gas as a foaming agent.

Patent Document 7 discloses a process for injection-foaming a thermoplastic resin by using an injection molding machine with a two-stage-compression screw, injecting a physical foaming agent into the cylinder of the machine at a pressure lower than the storage pressure of the physical foaming agent, mixing it with a melted resin and expanding the volume of the cavity of the mold at the time of injection, and an injection molding machine and resin composition suitable therefore.

### Background Art Document

### Patent Document

Patent Document 1: GB Patent No. 1,079,686
Patent Document 2: JP-A-2009-74031 (the term "JP-A" as used herein means an "unexamined published Japanese patent application")
Patent Document 3: JP-A-2009-964
Patent Document 4: JP-A-2002-192549
Patent Document 5: JP-A-2011-70019
Patent Document 6: JP-H-06-80813
Patent Document 7: EP 1 166 991 A2

### Summary of Invention

### Problem that Invention is to Solve

The foam-molded body of a polycarbonate resin containing isosorbide as a raw material has been poorly studied and developed and to the inventors' knowledge, only a foam-molded body of a homopolymer is proposed in Patent Document 3. However, the foaming performance of the isosorbide homopolymer in Patent Document 3 is not always satisfied. In addition, although an example using a polycarbonate resin having dissolved therein carbon dioxide is

disclosed in Patent Document 4, as will be appreciated from the fact that this example is Comparative Example, the conventional polycarbonate resin does not necessarily exhibit good foaming performance.

When a foam-molded body of a polycarbonate resin containing isosorbide as a raw material can be provided, its application can be greatly expanded, and a foam-molded body easy to produce and having good characteristics has been demanded.

An object of the present invention is to provide a method for producing a molded body that is easy and wherein the molded body is obtained by foaming a polycarbonate composition containing, as a raw material, isosorbide that is lightweight and excellent in mechanical properties.

Means for Solving Problem

As a result of many intensive studies to attain the above-described object, the present inventors have found that a polycarbonate copolymer having a structural unit derived from isosorbide and a structural unit derived from other dihydroxy compounds such as cyclohexanedimethanols, tricyclodecanedimethanols or hexanediols and having a glass transition temperature in a specific range has an excellent foaming performance and can provide for a lightweight molded body having high strength. The present invention has been accomplished based on this finding.

The present invention is as defined by the appended claims.

Advantageous Effects of the Invention

According to the method of the present invention, a foam-molded body having high expansion ratio and good impact resistance, namely a form-molded body which is particularly lightweight, excellent in the strength and excellent in the tensile modulus, can be obtained.

Mode for Carrying Out Invention

The present invention is described in detail below. Incidentally, the present invention is not limited to the following embodiments and can be implemented by making various modifications therein within the scope of the claims.

Also, in the description of the present invention, "parts by mass" has the same meaning as "parts by weight". First, the polycarbonate copolymer for use in the method of the present invention is described, and next, the resin composition, foam-molding method, and usage of a foam-molded body (hereinafter, sometimes simply referred to as "molded body") are described.

[1] Polycarbonate Copolymer

The polycarbonate copolymer for use in the method of the present invention has a structural unit derived from a dihydroxy compound represented by the following formula (1):

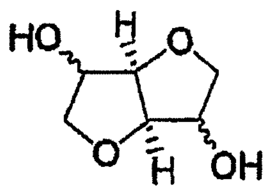

(1)

and a structural unit derived from other dihydroxy compounds and has a specific glass transition temperature, and the polycarbonate copolymer can be produced by using the following dihydroxy compounds as the raw material.

<Dihydroxy Compound Represented by Formula (1)>

The dihydroxy compound represented by formula (1) (hereinafter, sometimes simply referred to as "compound of formula (1)") includes, for example, isosorbide, isomannide and isoidide, which are in a stereoisomeric relationship. These compounds are obtained from D-glucose, D-mannose and L-idose, respectively. For example, isosorbide can be obtained by hydrogenating D-glucose and then performing dehydration using an acid catalyst.

One of these compounds may be used alone, or two or more thereof may be used in combination. Among these dihydroxy compounds, isosorbide obtained by dehydration condensation of sorbitol produced from various starches

existing abundantly as a resource and being easily available is most preferred in view of availability, ease of production, optical properties and moldability.

<Other Dihydroxy Compounds>

The other dihydroxy compound is at least any one compound selected from the group consisting of dihydroxy compounds represented by the following formulae (2) to (5) .

Incidentally, in the following, the carbon number of various groups means, when the group has a substituent, the total carbon number including the carbon number of the substituent.

$$HO\text{-}R^1\text{-}OH \qquad (2)$$

(In formula (2), $R^1$ represents a substituted or unsubstituted cycloalkylene group having a carbon number of 4 to 20).

$$HO\text{-}CH_2\text{-}R^2\text{-}CH_2\text{-}OH \qquad (3)$$

(In formula (3), $R^2$ represents a substituted or unsubstituted cycloalkylene group having a carbon number of 4 to 20).

$$H\text{-}(O\text{-}R^3)_P\text{-}OH \qquad (4)$$

(In formula (4), $R^3$ represents a substituted or unsubstituted alkylene group having a carbon number of 2 to 10, and p is an integer of 2 to 50).

$$HO\text{-}R^4\text{-}OH \qquad (5)$$

(In formula (5), $R^4$ represents a substituted or unsubstituted alkylene group having a carbon number of 2 to 20 or a group containing a substituted or unsubstituted acetal ring).

The dihydroxy compounds represented by formulae (2) to (5) are described in more detail below.

<Dihydroxy Compound Represented by Formula (2)>

The dihydroxy compound represented by formula (2) (hereinafter, sometimes simply referred to as "compound of formula (2)") is an alicyclic dihydroxy compound having as $R^1$ a substituted or unsubstituted cycloalkylene group with a carbon number of 4 to 20, preferably a carbon number of 4 to 18. Here, in the case where $R^1$ has a substituent, the substituent includes a substituted or unsubstituted alkyl group having a carbon number of 1 to 12, and in the case where this alkyl group has a substituent, examples of the substituent include an alkoxy group such as methoxy group, ethoxy group and propoxy group, and an aryl group such as phenyl group and naphthyl group.

This dihydroxy compound contains a ring structure, whereby the toughness of a molded article when the obtained polycarbonate copolymer is molded can be enhanced.

The cycloalkylene group of $R^1$ is not particularly limited as long as it is a hydrocarbon group containing a ring structure, and the structure may be a bridged structure having a bridgehead carbon atom. From the standpoint that production of a dihydroxy compound is facilitated and the amount of impurities can be reduced, the dihydroxy compound represented by formula (2) is preferably a compound containing a 5-membered ring structure or a 6-membered ring structure, that is, a dihydroxy compound where $R^1$ is a substituted or unsubstituted cyclopentylene group or a substituted or unsubstituted cyclohexylene group. Such a dihydroxy compound contains a 5-membered ring structure or a 6-membered ring structure, so that heat resistance of the obtained polycarbonate copolymer can be increased. The 6-membered ring structure may be fixed in a chair or boat form by covalent bonding.

Above all, in the compound of formula (2), $R^1$ is preferably a variety of isomers represented by the following formula (7). Here, in formula (7), $R^{11}$ represents a hydrogen atom or a substituted or unsubstituted alkyl group having a carbon number of 1 to 12. When $R^{11}$ is an alkyl group having a carbon number of 1 to 12 and having a substituent, examples of the substituent include an alkoxy group such as methoxy group, ethoxy group and propoxy group, and an aryl group such as phenyl group and naphthyl group.

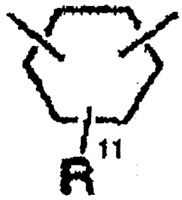

(7)

More specifically, examples of the compound of formula (2) include, but are not limited to, tetramethylcyclobutanediol, 1,2-cyclopentanediol, 1,3-cyclopentanediol, 1,2-cyclohexanediol, 1,3-cyclohexanediol, 1,4-cyclohexanediol, 2-methyl-1,4-cyclohexanediol, tricyclodecanediols, and pentacyclodiols.

According to the performance required of the obtained polycarbonate copolymer, one of these compounds may be used alone, or two or more thereof may be used in combination.

<Dihydroxy Compound Represented by Formula (3)>

The dihydroxy compound represented by formula (3) (hereinafter, sometimes simply referred to as "compound of formula (3)") is an alicyclic dihydroxy compound having as $R^2$ a substituted or unsubstituted cycloalkylene group with a carbon number of 4 to 20, preferably a carbon number of 3 to 18. Here, in the case where $R^2$ has a substituent, the substituent includes a substituted or unsubstituted alkyl group having a carbon number of 1 to 12, and in the case where this alkyl group has a substituent, examples of the substituent include an alkoxy group such as methoxy group, ethoxy group and propoxy group, and an aryl group such as phenyl group and naphthyl group.

This dihydroxy compound contains a ring structure, whereby the toughness of a molded article when the obtained polycarbonate copolymer is molded can be enhanced.

The cycloalkylene group of $R^2$ is not particularly limited as long as it is a hydrocarbon group containing a ring structure, and the structure may be a bridged structure having a bridgehead carbon atom. From the standpoint that production of a dihydroxy compound is facilitated and the amount of impurities can be reduced, the dihydroxy compound represented by formula (3) is preferably a compound containing a 5-membered ring structure or a 6-membered ring structure, that is, a dihydroxy compound where $R^2$ is a substituted or unsubstituted cyclopentylene group or a substituted or unsubstituted cyclohexylene group. Such a dihydroxy compound contains a 5-membered ring structure or a 6-membered ring structure, so that the resistance of the obtained polycarbonate copolymer can be increased. The 6-membered ring structure may be fixed in a chair or boat form by covalent bonding. Above all, in the dihydroxy compound of formula (3), $R^2$ is preferably a variety of isomers represented by formula (7).

More specifically, examples of the compound of formula (3) include, but are not limited to, cyclopentanedimethanols such as 1,3-cyclopentanedimethanol, cyclohexanedimethanols such as 1,2-cyclohexanedimethanol, 1,3-cyclohexanedimethanol and 1,4-cyclohexanedimethanol, and tricyclodecanedimethanols such as 3,8-bis(hydroxymethyl)tricyclo[5.2.1.$0^{2.6}$]decane, 3,9-bis(hydroxymethyl)tricyclo[5.2.1.$0^{2.6}$]decane, 4,8-bis(hydroxymethyl)tricyclo[5.2.1.$0^{2.6}$]decane and 4,9-bis(hydroxymethyl)tricyclo[5.2.1.$0^{2.6}$]decane.

According to the performance required of the obtained polycarbonate copolymer, one of these compounds may be used alone, or two or more thereof may be used in combination.

That is, these compounds are sometimes obtained as a mixture of isomers for a production-related reason and in this case, the isomer mixture can be used as it is. For example, a mixture of 3,8-bis(hydroxymethyl)tricyclo[5.2.1.$0^{2.6}$]decane, 3,9-bis(hydroxymethy1)tricyclo[5.2.1.$0^{2.6}$]decane, 4,8-bis(hydroxymethyl)tricyclo[5.2.1.$0^{26}$]decane and 4,9-bis(hydroxymethyl)tricyclo[5.2.1.$0^{2.6}$]decane can be used.

Among specific examples of the dihydroxy compound of formula (3), cyclohexanedimethanols are particularly preferred, and in view of availability and ease of handling, 1,4-cyclohexanedimethanol, 1,3-cyclohexanedimethanol and 1,2-cyclohexanedimethanol are preferred.

<Dihydroxy Compound Represented by Formula (4)>

The dihydroxy compound represented by formula (4) (hereinafter, sometimes simply referred to as "compound of formula (4)") is a compound having as $R^3$ a substituted or unsubstituted alkylene group with a carbon number of 2 to 10, preferably a carbon number of 2 to 5. p is an integer of 2 to 50, preferably an integer of 2 to 30, more preferably an integer of 2 to 15.

Specifically, examples of the compound of formula (4) include, but are not limited to, diethylene glycol, triethylene glycol, and a polyethylene glycol (having a molecular weight of 150 to 4,000). The compound of formula (4) is preferably a polyethylene glycol having a molecular weight of 300 to 2,000, more preferably a polyethylene glycol having a molecular number of 600 to 1,500.

According to the performance required of the obtained polycarbonate copolymer, one of these compounds may be used alone, or two or more thereof may be used in combination.

<Dihydroxy Compound Represented by Formula (5)>

The dihydroxy compound represented by formula (5) (hereinafter, sometimes simply referred to as "compound of formula (5)") is a dihydroxy compound having as $R^4$ a substituted or unsubstituted alkylene group with a carbon number of 2 to 20, preferably a carbon number of 2 to 10, or a group containing a substituted or unsubstituted acetal ring. In the case where the alkylene group of $R^4$ has a substituent, the substituent includes an alkyl group having a carbon number of 1 to 5. Also, when the group containing an acetal ring of $R^4$ has a substituent, the substituent includes an alkyl group having a carbon number of 1 to 3.

Among compounds of formula (5), examples of the dihydroxy compound where $R^4$ is a substituted or unsubstituted alkylene group having a carbon number of 2 to 20 include, but are not limited to, propanediols such as 1,3-propanediol and 1,2-propanediol, butanediols such as 1,4-butanediol and 1,3-butanediol, heptanediols such as 1,5-heptanediol, and hexanediols such as 1,6-hexanediol. Among these, hexanediols are preferred.

On the other hand, the dihydroxy compound where $R^4$ is a group containing a substituted or unsubstituted acetal ring is not particularly limited but, among these, is preferably a dihydroxy compound having a spiro structure represented by the following formula (8) or (9), more preferably a dihydroxy compound having a plurality of ring structures represented by the following formula (8).

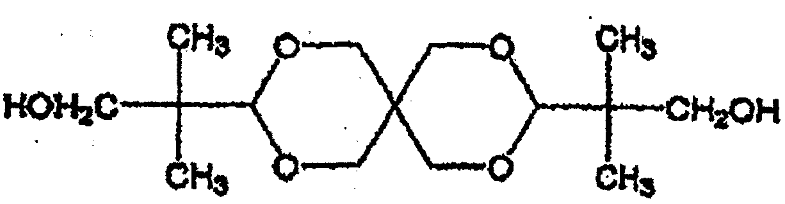

(8)

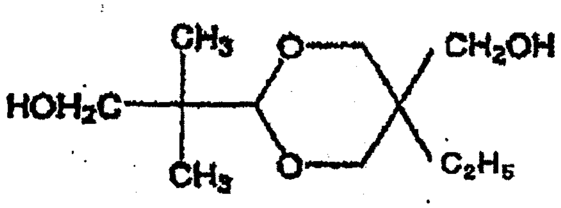

(9)

Among these dihydroxy compounds, in view of availability, ease of handling, high reactivity during polymerization, and hue of the obtained polycarbonate copolymer, 1,3-propanediol and 1,6-hexanediol are preferred. Also, in view of heat resistance, dihydroxy compounds having a group containing an acetal ring are preferred, and a compound having a plurality of ring structures typified by formula (8) is more preferred.

According to the performance required of the obtained polycarbonate copolymer, one of these compounds may be used alone, or two or more thereof may be used in combination.

<Dihydroxy Compound Other Than Compounds Represented by Formulae (1) to (5)>

In addition to the structural units derived from the compounds of formulae (1) to (5), the polycarbonate copolymer for use in the present invention may contain a structural unit derived from other dihydroxy compounds.

The dihydroxy compound other than the compounds of formulae (1) to (5) includes, for example, bisphenols.

Examples of the bisphenols include 2,2-bis(4-hydroxyphenyl)propane (= bisphenol A), 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxydiphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, 1,1-bis(4-hydroxyphenyl)cyclohexane, bis(4-hydroxyphenyl)sulfone, 2,4-dihydroxydiphenylsulfone, bis(4-hydroxyphenyl)sulfide, 4,4'-dihydroxydiphenyl ether, 4,4'-dihydroxy-3,3'-dichlorodiphenyl ether, and 4,4'-dihydroxy-2,5-diethoxydiphenyl ether.

According to the performance required of the obtained polycarbonate copolymer, one of these compounds may

be used alone, or two or more thereof may be used in combination.

The structural unit derived from other dihydroxy compounds in the polycarbonate copolymer for use in the present invention is preferably any one structural unit selected from the group consisting of cyclohexanedimethanols, tricyclodecanedimethanols and hexanediols.

<Ratio of Dihydroxy Compound-Derived Structural Units Contained>

The ratio of the structural unit derived from a dihydroxy compound represented by formula (1) to the structural units derived from all dihydroxy compounds constituting the polycarbonate copolymer is 30 mol% or more, preferably 40 mol% or more, more preferably 50 mol% or more, and is 90 mol% or less.

If the ratio of the structural unit derived from a dihydroxy compound represented by formula (1) to the structural units derived from all dihydroxy compounds constituting the polycarbonate copolymer is less than this range, the degree of plant derivation may decrease and furthermore, the glass transition temperature may be lowered, failing in obtaining the required heat resistance. Also, if the ratio of the structural unit derived from a dihydroxy compound represented by formula (1) to the structural units derived from all dihydroxy compounds constituting the polycarbonate copolymer exceeds the range above, the impact resistance may be reduced and furthermore, the gas solubility may be low, failing in obtaining sufficient lightweight effect when the polymer is foam-molded.

<Physicochemical Properties of Polycarbonate Copolymer>

Here, the polycarbonate copolymer for use in the present invention is characterized by having a glass transition temperature of less than 145°C.

As for the glass transition temperature (Tg), the upper limit is preferably 140°C or less, more preferably 135°C or less, still more preferably 130°C or less, and the lower limit is usually 40°C or more, preferably 50°C or more, more preferably 60°C or more, still more preferably 70°C or more.

If the glass transition temperature is too high, foam-molding tends to require a high temperature, and the gas solubility in the polymer may be low, failing in obtaining a high expansion ratio when the polymer is foam-molded. Furthermore, if the glass transition temperature is too low, heat resistance of the foam-molded body may be deteriorated.

The physicochemical properties other than the glass transition temperature (Tg) are not particularly limited, but it is preferred to obtain a molded body by foaming a polymer having the following properties.

First, as for the polymerization degree of the polycarbonate copolymer, in terms of reduced viscosity measured at a temperature of 30.0°C±0.1°C by using, as a solvent, a mixed solution of phenol and 1,1,2,2-tetrachloroethane in a mass ratio of 1:1 and accurately adjusting the polycarbonate concentration to 1.00 g/dl, the polymerization degree is preferably 0.40 dl/g or more, and is usually 2.00 dl/g or less, preferably 1.60 dl/g or less. If the reduced viscosity is extremely low, the mechanical strength when foam-molded is likely to decrease, whereas if the reduced viscosity is too high, flowability during molding tends to be reduced.

Also, the polycarbonate copolymer gives a single glass transition temperature when differential scanning calorimeter (DSC) measurement is performed, but by adjusting the kind or blending ratio of the dihydroxy compound represented by formula (1) and other dihydroxy compounds at the production, a polymer having an arbitrary glass transition temperature can be obtained.

The 5% thermal weight loss temperature is preferably 340°C or more, more preferably 345°C or more. As the 5% thermal weight loss temperature is higher, the thermal stability becomes higher and the polymer can withstand use at a higher temperature. Also, the production temperature can be set high and the latitude for control during production can be broadened, facilitating the production. As the thermal weight loss temperature is lower, the thermal stability is reduced and use at a high temperature becomes difficult. In addition, the latitude for control during production is narrowed, making it difficult to produce the polymer. Accordingly, the upper limit of the 5% thermal weight loss temperature is not limited, and a higher thermal weight loss temperature is better. The decomposition temperature of the copolymer serves as the upper limit.

The Izod impact strength is preferably 30 $J/m^2$ or more. As the Izod impact strength is larger, the molded body has higher strength and is less likely to be broken and therefore, the upper limit is not particularly limited.

In the polycarbonate copolymer for use in the present invention, the amount of gas evolution other than a phenol component per unit area at 110°C (hereinafter, sometimes simply referred to as "amount of gas evolution") is preferably 5 $ng/cm^2$ or less, and it is more preferred that the amount of gas evolution derived from a dihydroxy compound other than the dihydroxy compound represented by formula (1) is 0.5 $ng/cm^2$ or less. As this amount of gas evolution is smaller, the polymer can be applied to usage which is detrimentally effected by gas evolution, for example, storing an electronic part such as a semiconductor, a use as an interior material of a building, and a housing case for home electric appliances .

Incidentally, specific methods for measuring the 5% thermal weight loss temperature, the Izod impact strength

and the amount of gas evolution of the polycarbonate copolymer are described in the Examples later.

The polycarbonate copolymer for use in the present invention preferably has, out of the physical properties above, at least two properties simultaneously, for example, has a glass transition temperature (Tg) of less than 145°C and an Izod impact strength of 30 J/$m^2$ or more, and more preferably further has other physical properties in combination. If the glass transition temperature is 145°C or more, the foam-molding tends to require a high temperature and in addition, the gas solubility may be low, making it difficult to obtain a high expansion ratio when the polymer is foam-molded. Furthermore, if the Izod impact strength is less than 30 J/$m^2$, the strength of the foam-molded body may be reduced.

The polycarbonate copolymer for use in the present invention can be produced by a polymerization method in general use, and the polymerization method may be either a solution polymerization method using phosgene or a melt polymerization method using a reaction with a carbonic acid diester. More specifically, the method is preferably, for example, a melt polymerization method where a dihydroxy compound represented by formula (1), other dihydroxy compounds (any compound selected from the group consisting of compounds of formulae (2) to (5)), and a dihydroxy compound other than those, which is used, if desired, are reacted with a carbonic acid diester in the presence of a polymerization catalyst.

This melt polymerization method itself is a known method, and details thereof are described, for example, in JP-A-2008-24919, JP-A-2009-161746, JP-A-2009-161745, International Publication No. 2011/06505, and JP-A-2011-111614. The polycarbonate copolymer for use in the present invention can be produced in accordance with the method described in these publications.

[2] Resin Composition

<Thermoplastic Resin>

In the present invention, it is also preferred to blend a predetermined amount of a thermoplastic resin with the above-described polycarbonate resin.

The blending amounts of the polycarbonate resin and the thermoplastic resin are from 1 to 99 parts by mass of the polycarbonate resin and from 99 to 1 part by mass of the thermoplastic resin; preferably, from 10 to 99 parts by mass of the polycarbonate resin and from 90 to 1 part by mass of the thermoplastic resin; more preferably, from 30 to 99 parts by mass of the polycarbonate resin and from 70 to 1 part by mass of the thermoplastic resin; and still more preferably, from 50 to 99 parts by mass of the polycarbonate resin and from 50 to 1 part by mass of the thermoplastic resin. If the blending amount of the thermoplastic resin is too large, the degree of plant derivation may decrease, whereas if the blending amount is too small, improvement of the polycarbonate resin may not be sufficiently achieved.

Here, the thermoplastic resin includes, for example, an aromatic polyester-based resin such as polyethylene terephthalate, polypropylene terephthalate, polybutylene terephthalate and polycyclohexanedimethanol terephthalate; a saturated polyester-based resin including an aliphatic polyester-based resin such as polylactic acid, polybutylene succinate and polycyclohexanedimethanol cyclohexane dicarboxylate; an aromatic polycarbonate-based resin composed of various bisphenols such as bisphenol A and bisphenol Z; an alicyclic polycarbonate-based resin composed of an alicyclic diol such as 3(4),8(9)-bis(hydroxymethyl)tricyclo[5.2.1.$0^{2,6}$]decane; a polycarbonate-based resin including an aliphatic polycarbonate-based resin composed of a heterocyclic diol such as 3,9-bis(1,1-dimethyl-2-hydroxyethyl)-2,4,8,10-tetraoxaspiro[5,5]undecane; an aliphatic polyamide-based resin such as 6, 66, 46 and 12; a polyamide-based resin including a semi-aromatic polyamide-based resin such as 6T, 61 and 9T; a styrene-based resin such as polystyrene resin, high impact polystyrene-based resin, acrylonitrile/styrene-based resin (AS), acrylonitrile/butadiene/styrene-based resin (ABS), acrylonitrile/ethylene propylene (diene)/styrene resin (AES) and crystalline syndiotactic polystyrene resin; an acrylic resin such as PMMA and MBS; a copolymerized polyethylene-based resin such as low-density, medium-density or high-density polyethylene, ethylene/methacrylate copolymer (EMA), ethylene/vinyl acetate copolymer (EVA) and ethylene/glycidyl methacrylate copolymer (E/GMA); an olefin-based resin such as polypropylene-based resin, 4-methyl-pentene-1 resin, cycloolefin polymer (COP) and cycloolefin copolymer (COC); a thermoplastic resin such as a polyacetal resin, a polyamideimide resin, a polyethersulfone resin, a polyimide resin, a polyphenylene oxide resin, a polyphenylene sulfide resin, a polyphenylsulfone resin, a polyether ether ketone resin, a liquid crystalline polyester resin, a thermoplastic polyurethane resin, a polyvinyl chloride resin, fluororesin, and a mixture thereof.

Among these, preferred are a polyester-based resin composed of an aromatic polyester-based resin, a saturated polyester-based resin, and a polycarbonate resin composed of an aromatic polycarbonate-based resin and free from a structure derived from a dihydroxy compound represented by formula (1). Furthermore, among these, the polyester-based resin is more preferably an aromatic polyester-based resin such as polyethylene terephthalate, polypropylene, terephthalate, polybutylene terephthalate and polycyclohexanedimethanol terephthalate, and the polycarbonate resin composed of an aromatic polycarbonate-based resin and free from a structural unit derived from a dihydroxy compound represented by formula (1) is more preferably an aromatic polycarbonate-based resin composed of various bisphenols such as bisphenol A and bisphenol Z.

One of these thermoplastic resins may be used, or two or more thereof may be mixed and used, and the thermoplastic resin can be appropriately selected and used by taking into account the properties required according to the intended use, such as heat resistance, chemical resistance and moldability. Furthermore, the thermoplastic resin may be used after applying thereto graft modification or terminal modification with an unsaturated compound such as maleic anhydride.

<Additives, etc.>

In the present invention, the above-described polycarbonate copolymer is used to form a resin composition having blended therein, if desired, various additives such as heat stabilizer, antioxidant, ultraviolet absorber, light stabilizer and bluing agent, a foam adjusting agent, and other resins and is subjected to foam-molding together with a foaming agent according to the foam-molding method.

Specifically, in the present invention, a heat stabilizer can be blended with the polycarbonate copolymer so as to prevent, e.g., reduction in the molecular weight or deterioration of the hue during molding.

The heat stabilizer includes, for example, a phosphorous acid, a phosphoric acid, a phosphonous acid, a phosphonic acid, and an ester thereof. Specific examples thereof include triphenyl phosphite, tris(nonylphenyl)phosphite, tris(2,4-di-tert-butylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritol diphosphite, 2,2-methylenebis(4,6-di-tert-butylphenyl)octyl phosphite, bis(nonylphenyl)pentaerythritol diphosphite, bis(2,4-di-tert-butylphenyl)pentaerythritol diphosphite, distearylpentaerythritol diphosphite, tributyl phosphate, triethyl phosphate, trimethyl phosphate, triphenyl phosphate, diphenylmonoorthoxenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate, and dipropyl benzenephosphonate.

Among these, preferred are trisnonylphenyl phosphite, trimethyl phosphate, tris(2,4-di-tert-butylphenyl)phosphite, bis(2,4-di-tert-butylphenyl)pentaerythritol diphosphite, bis(2,6-di-tert-butyl-4-methylphenyl)pentaerythritol diphosphite, and dimethyl benzenephosphonate.

One of these heat stabilizers may be used alone, or two or more thereof may be used in combination.

The heat stabilizer may be further additionally blended in addition to the amount added at the melt polymerization. That is, when a polycarbonate copolymer is obtained by blending an appropriate amount of a phosphorous acid compound or phosphoric acid compound and thereafter, a phosphorous acid compound is further blended, a large amount of a heat stabilizer can be blended while avoiding increase in the haze, coloration and reduction in the heat resistance during polymerization, and deterioration of the hue can be prevented.

The blending amount of the heat stabilizer is preferably 0.0001 parts by mass or more, more preferably 0.0005 parts by mass or more, still more preferably 0.001 parts by mass or more, and is preferably 1 part by mass or less, more preferably 0.5 parts by mass or less, still more preferably 0.2 parts by mass or less, per 100 parts by mass of the polycarbonate copolymer.

Also, in the present invention, an antioxidant may be blended with the polycarbonate copolymer for the purpose of preventing oxidation.

The antioxidant includes, for example, pentaerythritol tetrakis(3-mercaptopropionate), pentaerythritol tetrakis(3-laurylthiopropionate), glycerol-3-stearylthiopropionate, triethylene glycol-bis([3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylene-bis(3,5-di-tert-butyl-4-hydroxy-hydrocinnamide), 3,5-di-tert-butyl-4-hydroxy-benzylphosphonate-diethyl ester, tris(3,5-di-tert-butyl-4-hydroxybenzyl)isocyanurate, tetrakis(2,4-di-tert-butylphenyl) 4,4'-biphenylenediphosphinate, and 3,9-bis{1,1-dimethyl-2-[β-(3-tert-butyl-4-hydroxy-5-methylphenyl)propionyloxy]ethyl} -2,4,8,10-tetraoxaspiro(5,5)undecane.

One of these antioxidants may be used alone, or two or more thereof may be used in combination.

The blending amount of the antioxidant is preferably from 0.0001 parts by mass or more, more preferably 0.01 parts by mass or more, and is preferably 0.5 parts by mass or less, more preferably 0.3 parts by mass or less, per 100 parts by mass of the polycarbonate copolymer.

Also, in the present invention, a release agent can be blended with the polycarbonate copolymer for enhancing the roll releasability from a cooling roll at the time of extrusion foam-molding or mold releasability from a mold at the time of injection foam-molding

The release agent includes, for example, a higher fatty acid ester of monohydric or polyhydric alcohol, a higher fatty acid, a paraffin wax, bees wax, an olefin-based wax, an olefin-based wax containing a carboxy group and/or a carboxylic acid anhydride group, a silicone oil, and an organopolysiloxane.

The higher fatty acid ester is preferably, for example, a partial or complete ester of a monohydric or polyhydric

alcohol having a carbon number of 1 to 20 with a saturated fatty acid having a carbon number of 10 to 30.

Examples of the partial or complete ester of a monohydric or polyhydric alcohol with a saturated fatty acid include monoglyceride stearate, diglyceride stearate, triglyceride stearate, monosorbitate stearate, stearyl stearate, behenic acid monoglyceride, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate, and 2-ethylhexyl stearate.

Among these, monoglyceride stearate, triglyceride stearate, pentaerythritol tetrastearate, and behenyl behenate are preferred.

The higher fatty acid is preferably, for example, a saturated fatty acid having a carbon number of 10 to 30. Examples of such a fatty acid include a myristic acid, a lauric acid, a palmitic acid, a stearic acid, and a behenic acid.

One of these release agents may be used alone, or two or more thereof may be mixed and used.

The blending amount of the release agent is preferably 0.01 parts by mass or more, more preferably 0.1 parts by mass or more, and is preferably 5 parts by mass or less, more preferably 1 part by mass or less, per 100 parts by mass of the polycarbonate.

Also, in the present invention, an ultraviolet absorber or a light stabilizer can be blended with the polycarbonate .copolymer for the purpose of preventing discoloration due to an ultraviolet ray.

The ultraviolet absorber or light stabilizer includes, for example, 2-(2'-hydroxy-5'-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis($\alpha$,$\alpha$-dimethylbenzyl)phenyl]-2H-benzotriazole, 2,2'-methylenebis(4-cumyl-6-benzotriazolephenyl), and 2,2'-p-phenylenebis(1,3-benzoxazin-4-one).

One of these ultraviolet absorbers or light stabilizers may be used alone, or two or more thereof may be used in combination.

The blending amount of the ultraviolet absorber or light stabilizer is preferably 0.001 parts by mass or more, more preferably 0.01 parts by mass or more, and is preferably 2 parts by mass or less, more preferably 0.5 parts by mass or less, per 100 parts by mass of the polycarbonate copolymer.

Also, in the present invention, a bluing agent may be blended with the polycarbonate copolymer for eliminating a yellowish tint attributable to the polymer or the ultraviolet absorber.

The bluing agent is not particularly limited as long as it is used for the existing polycarbonate resin, but an anthraquinone-based dye is preferred.

Specifically, examples thereof include Solvent Violet 13 [CA. No. (Color Index No.) 60725], Solvent Violet 31 [CA. No. 68210], Solvent Violet 33 (CA. No. 60725), Solvent Blue 94 (CA. No. 61500), Solvent Violet 36 (CA. No. 68210), Solvent Blue 97 ("Macrolex Violet RR", produced by Bayer AG), and Solvent Blue 45 (CA. No. 61110).

One of these bluing agents may be used alone, or two or more thereof may be used in combination.

The blending amount of the bluing agent is usually $0.1\times10^{-5}$ parts by mass or more, preferably $0.1\times10^{-4}$ parts by mass or more, and is usually $2\times10^{-1}$ parts by mass or less, preferably $0.5\times10^{-1}$ parts by mass or less, per 100 parts by mass of the polycarbonate copolymer.

Also, in the present invention, a foam adjusting agent can be blended with the polycarbonate copolymer for achieving smooth foaming.

The foam adjusting agent includes, for example, a plate-like, powdery or fibrous inorganic compound such as talc, silica, alumina, mica, calcium carbonate, wollastonite, montmorillonite and kaolin. Such an inorganic compound may be surface-treated, for example, with a silane-coupling agent, a titanate-based coupling agent, an Si-H bond-containing silicone-based compound or an organosiloxane compound. Other than those described above, for example, an acidic salt of polyvalent carboxylic acid and a mixture of polyvalent carboxylic acid and sodium carbonate or sodium bicarbonate are also preferred as the foam adjusting agent.

One of these foam adjusting agents may be used alone, or two or more thereof may be used in combination.

The blending amount of the foam adjusting agent is preferably 0.1 parts by mass or more, more preferably 0.3 parts by mass or more, and is preferably 50 parts by mass or less, more preferably 10 parts by mass or less, per 100 parts by mass of the polycarbonate copolymer.

Blending of the polycarbonate copolymer for use in the present invention with various additives and other resins can be performed by a method that is itself known and usually employed. Examples thereof include a method of mixing those components by a tumbler, a V-blender, a super-mixer, a Nauter mixer, a Banbury mixer, a kneading roll, or an extruder , and a solution blend system of mixing the above described each component in a state of being dissolved in a common good solvent such as methylene chloride.

<Henry's Constant of Resin Composition>

The molded body obtained by the method of the present invention is preferably obtained by foam-molding a resin composition where the Henry's constant of carbon dioxide at 200°C for the resin composition is from $2.5\times10^{-3}$ to

$4.0\times10^{-3}$ g (carbon dioxide)/g (resin composition)•MPa.

According to the Henry's law, the solubility of carbon dioxide (gas) in the above-described resin composition at a constant temperature is proportional to the ambient pressure. This law is represented by the following formula:

$$C=kP \text{ (C: solubility of gas, P: pressure)}$$

Here, the proportionality constant k in the formula above is the Henry's constant. The solubility of carbon dioxide in the resin composition can be said to be small when the value of the Henry's constant is small, and be large when the value is large.

In this connection, the measurement method of the Henry's constant is specifically described in Examples later.

In the resin composition for use in the present invention, the Henry's constant of carbon dioxide at 200°C for the resin composition [g (carbon dioxide)/g (resin composition)•MPa] is usually, preferably $2.5\times10^{-3}$ or more, more preferably $2.6\times10^{-3}$ or more, most preferably $2.7\times10^{-3}$ or more, and is usually, preferably $4.0\times10^{-3}$ or less, more preferably $3.9\times10^{-3}$ or less, still more preferably $3.8\times10^{-3}$ or less, yet still more preferably $3.7\times10^{-3}$ or less, most preferably $3.6\times10^{-3}$ or less.

By subjecting the resin composition having a Henry's constant in the range above to foam-molding, a molded body having a high expansion ratio and good impact resistance, that is, particularly, being lightweight and excellent in the strength, can be obtained.

The resin composition having a Henry's constant in the range above can be obtained, as already described above, by appropriately controlling the kind and content ratio of the copolymerization components of isosorbide as necessary.

[3] Foaming/Molding Method, Usage of Molded Body, etc.

In the present invention, the above-described resin composition is foam-molded together with a foaming agent according to the foam-molding method, whereby the molded body can be obtained.

In the present invention, the foaming agent is an inorganic gas.

The foaming agent includes, for example, nitrogen, carbon dioxide and water, which are in any one of gas, supercritical and subcritical states.

Among these, nitrogen and carbon dioxide each in a supercritical or subcritical state, and a mixture thereof are preferred.

One of these foaming agents may be used alone, or two or more thereof may be used in combination.

The amount of the foaming agent can be appropriately determined according to the kind of the foaming agent or the expansion ratio but is preferably 0.1 parts by mass or more, more preferably 0.5 parts by mass or more, and is preferably 20 parts by mass or less, more preferably 10 parts by mass or less, per 100 parts by mass of the polycarbonate copolymer.

In the present invention, the foam-molding step is carried out by means of injection foaming involving expansion of a cavity using a foaming agent.

Although various foam-molding methods exist, the foam-molding generally consists of the following steps:

1) a step of dissolving (or mixing) a foaming agent in the polymer,
2) a step of generating a bubble,
3) a step of growing the bubble (this step 3) often proceeds simultaneously with the step 2)), and
4) a step of fixing the bubble.

Usually, foam-molding methods are roughly classified into two groups. One is a batch-system foam-molding method, and an example thereof is a method of impregnating the molded body with a foaming agent and then bringing about foaming. In this batch-system foam-molding method, the process temperature is relatively low in general. Also, each of the steps above requires a relatively long time.

As for the method of bringing about foaming after impregnating the molded body with a foaming agent, for example, a molded body of the resin composition is placed in an autoclave, a supercritical fluid is added to impregnate the molded body with the supercritical fluid, and thereafter, the pressure is reduced, whereby a foam can be obtained. Also, in the case of a foaming agent capable of foaming under heating, the molded body is impregnated with the foaming agent and then heated, whereby a foam can be obtained.

Another is a continuous foam-molding method, and examples thereof include a foam-molding method using an extrusion molding machine (reference), an injection molding machine (invention), or a blow molding machine (reference). In this continuous foam-molding method, the process temperature is relatively high in general. Also, each of the steps above requires a relatively short time.

The extrusion foam-molding includes, for example, (a) a method where the resin composition and the foaming agent are melt-kneaded in an extruder, the molten resin is extruded from a circular die at the end of the extruder, a cylindrical foam is formed in a cylindrical cooling device (mandrel), and the foam is cut open in the extrusion direction to take on a sheet shape, and (b) a method where the resin composition and the foaming agent are melt-kneaded in an extruder, the molten resin is extruded into a sheet form from a T-die at the end of the extruder, and the sheet is taken off by a cooling roll to obtain a sheet.

Incidentally, the foaming agent may be used by previously mixing it with the polycarbonate copolymer or may be injected in the middle of the extruder.

The injection foam-molding includes, for example, (c) a method where the foaming agent is mixed or dissolved in the molten-state resin composition in an injection molding machine and at the injection molding in a mold, the mold is filled with the resin composition while foaming the resin, and (d) a method where the foaming agent is mixed or dissolved in the molten-state resin composition in an injection molding machine, a pressure is applied during injection filling of a mold by using, for example, a counter pressure or a resin pressure at the injection so as to prevent foaming, and then foaming is caused by reducing the pressure, for example, by retreat of the movable side of the mold, release of the counter pressure or shrinkage of the resin composition during cooling. According to the invention the injection molding is conducted by expansion of a cavity.

In the present invention, among polycarbonates having a structural unit derived from isosorbide, a polycarbonate copolymer having a structural unit derived from other dihydroxy compounds, particularly a polycarbonate copolymer having a glass transition temperature (Tg) in the specific range, is considered to have appropriate properties, that is, appropriate gas solubility and gas diffusibility, for both the batch-system foam-molding method and the continuous foam-molding method. Therefore, when the composition is foam-molded, a foam-molded body having a sufficient expansion ratio and a good foamed form (the size, number density and independence = no or little open cell of bubble) is obtained, and this is presumed to enable the obtaining of a lightweight foam-molded body having good mechanical properties (elongation).

As described above, in the present invention, the foam-molding method may be either a batch-system foam-molding or a continuous foam-molding method, but a continuous foam-molding method is considered to be preferable. This is because, among polycarbonates having a structural unit derived from isosorbide, a polycarbonate copolymer having a structural unit derived from other dihydroxy compounds, particularly a polycarbonate copolymer having a glass transition temperature (Tg) in the specific range, exhibits gas solubility and gas diffusibility more suitable for the continuous foam-molding process.

Of respective steps of mold-foaming, in the step 1) of dissolving (or mixing) a foaming agent in the polymer, as the gas diffusibility is higher, the gas dissolves at a higher rate, that is, the time required in the step can be shortened.

Also, in the step 3) of growing the bubble, as the gas diffusibility is higher, the bubble grows at a higher rate.

If the gas diffusibility is too high, the bubble is likely to be coarsened and when the foam-molded body is subject to deformation by an external force, the coarse bubble may work out to a fracture point, leading to reduction in the mechanical properties (elongation).

If the gas diffusibility is too low, the bubble may not sufficiently grow, failing in increasing the expansion ratio, and therefore, the lightweight effect may be reduced.

Among polycarbonates having a structural unit derived from isosorbide for use in the present invention, a polycarbonate copolymer having a structural unit derived from other dihydroxy compounds, particularly a polycarbonate copolymer having a glass transition temperature (Tg) in the specific range, is higher in the gas solubility than a polycarbonate not having a structural unit derived from other dihydroxy compounds or a polycarbonate copolymer having a structural unit derived from other dihydroxy compounds but having a glass transition temperature (Tg) of 145°C or more, and therefore, a larger amount of gas can be dissolved in the polymer in the gas dissolving step, so that it can be expected a more lightweight foam-molded body is obtained.

On the other hand, when the gas solubility is high, the gas diffusibility is similarly high in many cases. In the case where the gas solubility is high and the gas diffusibility is high, it is considered that gas escape from the surface of the molded body is likely to occur in the process of foam-molding and resin chipping or surface roughening attributable to the gas escape or coarsening of the bubble due to excessively high gas diffusibility may be caused. For this reason, it is not preferred that the gas solubility and the gas diffusibility are excessively high.

Among polycarbonates having a structural unit derived from isosorbide for use in the present invention, a polycarbonate copolymer having a structural unit derived from other dihydroxy compounds, particularly a polycarbonate copolymer having a glass transition temperature (Tg) in the specific range, is higher in the gas diffusibility than a polycarbonate not having a structural unit derived from other dihydroxy compounds or a polycarbonate copolymer having a structural unit derived from other dihydroxy compounds but having a glass transition temperature (Tg) of 145°C or more, and therefore, the bubble can be sufficiently grown even in the bubble growing step for a relatively short time and at the

same time, thanks to gas diffusibility that is not excessively high, a good foamed form can be developed, as a result, it is presumed that a lightweight foam-molded body having good mechanical properties (elongation) can be obtained.

On the other hand, the gas solubility and gas diffusibility vary according to the temperature and among polycarbonates having a structural unit derived from isosorbide for use in the present invention, a polycarbonate copolymer having a structural unit derived from other dihydroxy compounds, particularly a polycarbonate copolymer having a glass transition temperature (Tg) in the specific range, can be molded at a lower temperature than a polycarbonate not having a structural unit derived from other dihydroxy compounds, a polycarbonate copolymer having a structural unit derived from other dihydroxy compounds but having a glass transition temperature (Tg) of 145°C or more, or a general bisphenol-based polycarbonate, so that the gas diffusion coefficient can exist in an appropriate range and the bubble can be avoided, e.g., from coarsening due to excessively high gas diffusibility.

In the present invention, the molded body is obtained by foam-molding the resin composition above by using the above-described foaming agent according to injection foaming involving expansion of a cavity.

In this case, the injection foam-molding includes, for example, (a) a method where the foaming agent is mixed or dissolved in the molten-state resin composition in an injection molding machine and at the injection molding in a mold, the mold is filled with the resin composition while foaming the resin, and (b) a method where the foaming agent is mixed or dissolved in the molten-state resin composition in an injection molding machine, a pressure is applied during injection filling of a mold by using, for example, a counter pressure or a resin pressure at the injection so as to prevent foaming, and then foaming is caused by reducing the pressure, for example, by expansion of a cavity or release of the counter pressure resulting from retreat (core back) of the movable side of the mold or by shrinkage of the resin composition during cooling.

In this case, among the methods (b) where the foaming agent is mixed or dissolved in the molten-state resin composition in an injection molding machine, a pressure is applied during injection filling of a mold by using, for example, a counter pressure or a resin pressure at the injection so as to prevent foaming, and then foaming is caused by reducing the pressure, for example, by retreat of the movable side of the mold, release of the counter pressure or shrinkage of the resin composition during cooling, a method where the foaming agent is mixed or dissolved in the molten-state resin composition in an injection molding machine, a pressure is applied during injection filling of a mold by using, for example, a counter pressure or a resin pressure at the injection so as to prevent foaming, and then foaming is caused by expanding a cavity, for example, by retreat (core back) of the movable side of the mold, is preferred.

The cavity volume after expansion of the cavity is usually more than 1.1 times, preferably 1.5 times or more, more preferably 2.0 times or more, most preferably 2.5 times or more, and is usually 100 times or less, preferably 50 times or less, more preferably 30 times or less, most preferably 20 times or less, of the cavity volume at the completion of filling with the resin composition. -

If the expansion amount of the cavity is small, the lightweight effect may be reduced, whereas if the expansion amount of the cavity is large, the swelling amount of the resin composition due to foaming may become less than the expansion amount of the cavity and a foam-molded body of a desired dimension may not be obtained.

The timing of starting expansion of the cavity is almost at the same time as the completion of filling of the mold with the resin, i.e., within 0.1 seconds before or after the completion of filling.

If the timing of starting expansion of the cavity is significantly earlier than the completion of filling, foaming by the expansion of the cavity starts in the unfilled state of the mold and therefore, a foam-molded body having a desired dimension and a uniform density may not be obtained, whereas the timing of starting expansion of the cavity is significantly later than the completion of filling, a viscosity rise due to cooling of the resin may occur before expansion of the cavity, making it difficult to achieve foaming.

In the case where the expansion amount of the cavity is equal to the swelling amount of the resin due to foaming, a foam-molded body having a volume equal to the mold volume after expansion of the cavity is obtained and therefore, when expansion of the cavity is performed in the thickness direction, the "expansion ratio" can be defined by the ratio of the "thickness of foam-molded body" to the "thickness of mold before expansion of cavity" [(thickness of foam-molded body)/(thickness of mold before expansion of cavity)]. This "expansion ratio" becomes equal to (density of resin composition before foaming)/(density of foam-molded body).

The foam-molding temperature is not particularly limited as long as the resin composition can be foam-molded, but the temperature is usually 80°C or more, preferably 100°C or more, and is usually 300°C or less, preferably 260°C or less.

In more detail, the lower limit of the foam-molding temperature is preferably a temperature higher by 5°C or more, more preferably higher by 10°C or more, than the glass transition temperature (Tg) of the polycarbonate copolymer, and the upper limit is preferably a temperature higher by 200°C or less, more preferably higher by 150°C or less, than Tg of the copolymer.

By setting the temperature during foam-molding to fall in the range above, a foam at a desired expansion ratio can be molded while suppressing thermal decomposition of the resin. If the temperature is too high, the resin may be thermally decomposed, whereas if the temperature is too low, the resin viscosity tends to be high, making it difficult to

achieve foaming.

Also, in the present invention, the expansion ratio and cell size are not particularly limited and can be appropriately set by adjusting, for example, the amount of the foaming agent added or the molding method. Specifically, the expansion ratio is usually 1.1 times or more, preferably 1.5 times or more, more preferably 2.0 times or more, and is usually 100 times or less, preferably 50 times or less, more preferably 30 times or less.

Incidentally, the expansion ratio as used in the present invention is the value obtained by the method described in Examples. Furthermore, the shape of the foam (molded body) is also not particularly limited and can be appropriately determined according to use.

In the method of the present invention, multilayering or coextrusion with a non-foaming layer or of foaming layers one on another or lamination of a non-foamed resin such as polycarbonate and polyethylene terephthalate to the surface may be also performed. In the case of an injection molded article, after inserting a non-foamed sheet such as polycarbonate into one side or both sides in the mold, injection molding may be performed to make up an integrally molded article of a foam and a non-foamed sheet. At this time, a non-foamed sheet which is, for example, subjected to printing or provided with hardcoat or weather resistance may also be used. Furthermore, printing, an antistatic treatment or a treatment such as hardcoat may be applied to the surface of the molded body above.

The molded body obtained by the method of the present invention has a particularly high expansion ratio and good impact resistance, that is, among others, is lightweight and excellent in strength, and therefore, can be used, e.g., for a member in the fields such as electric/electronic field, automotive field and building field or for a food container, a light reflecting material, a heat insulating material, a sound blocking material, a buffer material, a low specific gravity material, a fuel cell separator, a low dielectric material, a low specific gravity material, and a seperation membrane.

[Reason Why the Present Invention Provides Effects]

In the present invention, among polycarbonates having a structural unit derived from isosorbide, a polycarbonate copolymer having a structural unit derived from other dihydroxy compounds, particularly a polycarbonate copolymer having a glass transition temperature (Tg) in the specific range, is considered to have appropriate gas solubility and gas diffusibility. Therefore, when the polymer is foam-molded, a foam-molded body having a sufficient expansion ratio and a good foamed form (the size, number density and independence = no or little open cell of bubble) is obtained, and this is presumed to enable production of a foam-molded body having good mechanical properties (elongation).

Examples

The present invention is described in greater detail below by referring to Examples, but the present invention is not limited to these Examples as long as the scope as defined by the claims is observed. Incidentally, the values of various production conditions and evaluation results in the following Examples have a meaning as a preferred value of the upper limit or lower limit in the embodiment of the present invention, and the preferred range may be a range defined by a combination of the upper or lower limit value above and the value in Example below or a combination of values in Examples.

<Glass Transition Temperature (Tg)>

About 10 mg of a sample was heated at a temperature rise rate of 10°C/min and measured by using a differential scanning calorimeter (DSC 822, manufactured by METTLER), and an extrapolation glass transition starting temperature that is a temperature at the intersection of a straight line drawn by extending the low temperature-side base line toward the high temperature side and a tangential line drawn at the point where the curve of the stepwise changing part of glass transition has a maximum gradient, was determined in accordance with JIS-K7121 (1987).

<Color Value b>

The color of chips was measured using a color meter (300A, manufactured by Nippon Denshoku Kogyo K.K.).

A predetermined amount of chips was put in a glass cell and measured by reflection measurement to determine the value b.

A smaller value indicates lower yellowness.

<Reduced Viscosity>

The reduced viscosity was measured at a temperature of 30.0°C±0.1°C by using an automatic viscometer (Ubbelohde viscometer), Model DT-504, manufactured by Chuo Rika Corp. and using a mixed solvent of phenol and

1,1,2,2-tetrachloroethane in a mass ratio of 1:1. The concentration was precisely adjusted to 1.00 g/dl.

The sample was dissolved with stirring at 120°C for 30 minutes and after cooling, used for the measurement.

The relative viscosity ηrel was determined from the flow-through time $t_0$ of the solvent and the flow-through time t of the solution according to the following formula:

$$\eta rel = t/t_0 \ (g \cdot cm^{-1} \cdot sec^{-1})$$

The specific viscosity ηsp was determined from the relative viscosity ηrel according to the following formula:

$$\eta sp = (\eta - \eta_0)/\eta_0 = \eta rel^{-1}$$

The reduced viscosity (reduction viscosity) ηred was determined by dividing the specific viscosity ηsp by the concentration c (g/dl) according to the following formula:

$$\eta red = \eta sp/c$$

A higher value indicates a larger molecular weight.

<5% Thermal Weight Loss Temperature>

Using TG-DTA (SSC-5200, TG/DTA220), manufactured by Seiko Instruments & Electronics Ltd., 10 mg of the sample was placed on an aluminum-made vessel and measured at a temperature rise rate of 10°C/min from 30°C to 450°C in a nitrogen atmosphere (nitrogen flow rate: 200 ml/min), and the temperature at which the sample experienced a decrease of 5 mass% was determined.

A higher temperature indicates that thermal decomposition is less likely to occur.

<Izod Impact Strength>

Using a mini-max injection molding machine, CS-183MMX, manufactured by Custom Scientific Inc., a test piece having a length of 31.5 mm, a width of 6.2 mm, and a thickness of 3.2 mm was injection-molded at a temperature of 240 to 300°C and provided with a 1.2 mm-deep notch by a notching machine to obtain a specimen.

The obtained specimen was measured for the notched Izod impact strength at 23°C by using a mini-max Izod impact tester, Model CS-183TI, manufactured by Custom Scientific Inc.

A larger value indicates higher impact strength and lower susceptibility to break.

<Amount of Gas Evolution>

A polycarbonate resin sample (8 g) vacuum-dried at 100°C for 5 hours was pressed by a hot press for 1 minute under the conditions of a hot press temperature of 200 to 250°C, a preheating for 1 to 3 minutes and a pressure of 20 MPa by using a spacer having a width of 8 cm, a length of 8 cm and a thickness of 0.5 mm, and then the sample with the spacer was taken out and press-cooled by a water-tube cooling press under a pressure of 20 MPa for 3 minutes to produce a sheet. A sample of 1 cm in width and 2 cm in length was cut out from the sheet. The thickness was 1 mm.

This sample was measured for the evolved gas by the thermal desorption-gas chromatography/mass spectrometry (TDS-GC/MS). As the measuring apparatus, TDS2 manufactured by GERSTEL was used, and the measurement was performed at a thermal-desorption temperature of 250°C for 10 minutes by setting the trap temperature to -130°C.

The sample was placed in a glass chamber, and the gas evolved at 110°C for 30 minutes with helium at 60 mL/min was collected by a collection tube Tenax-TA.

HP6890/5973N manufactured by Agilent Inc. was used as GC/MS, and HP-VOC: 0.32x60 m and 1.8 μm df was used as the column. The collection tube was held at 40°C for 5 minutes and after raising the temperature to 280°C at 8°C/min, further held at 280°C for 25 minutes, and the gas evolution was measured. The carrier gas was helium at 1.3 mL/min.

The amount of gas evolution was determined as the total evolution amount in terms of toluene per unit area, excluding phenol distilling out during production and phenol-derived benzaldehyde.

<Pencil Hardness>

A surface measuring device, TRIBOGEAR Type 14DR, manufactured by Shinto Scientific Co., Ltd. was used as the measuring apparatus, and the measurement was performed under the following conditions in accordance with JIS K 5600.
Load: 750 g
Measuring speed: 30 mm/min
Measuring distance: 7 mm
As the pencil, UNI manufactured by Mitsubishi Pencil Co., Ltd. was used.
As for the pencil hardness, 4H, 3H, 2H, H, F, HB, B, 2B, 3B, and 4B were used.
The measurement was performed 5 times, and the hardness one rank softer than the pencil hardness causing two or more occurrences of a scratch was taken as the pencil hardness of the material.

<Apparent Density>

The density before foaming and the density after foaming were measured by the Archimedes method (using a specific gravity measurement kit, room temperature, water solvent) by using a balance, XS204, manufactured by METTLER TOLEDO. Incidentally, this apparent density is hereinafter referred to as "density".

<Expansion Ratio 1>

The ratio [(density before foaming)/(density after foaming)] of the "density before foaming" to the "density after foaming" was taken as the "expansion ratio".

<Expansion Ratio 2>

The ratio of the "thickness of foam-molded body" to the "thickness of mold before expansion of cavity" [(thickness of foam-molded body)/(thickness of mold before expansion of cavity)] was taken as the "expansion ratio".

<Expansion Ratio 3>

(In the case of foam molding by core-back method)

The ratio of the "thickness of foam-molded body" to the "thickness of mold before expansion of cavity" [(thickness of foam-molded body)/(thickness of mold before expansion of cavity)] was taken as the "expansion ratio".

(In the case of foam molding by short-shot method)

The ratio of the "thickness of foam-molded body" to the "thickness of mold before expansion of cavity" [(thickness of foam-molded body)/(thickness of mold capable of receiving full shot)] was taken as the "expansion ratio".

<Tensile Test of Resin Before Foam-Molding>

A tensile test piece having a parallel-part length of 9 mm and a parallel-part diameter of 1.5 mm was injection-molded using the above-described injection molding machine at a temperature of 240 to 300°C and by performing a tensile test under the conditions of a tensile speed of 1 cm/min by using a tensile tester, Model CS-183TE, manufactured by Custom Scientific Inc., the elongation at yield, the tensile strength at yield, the tensile modulus at yield, and the elongation at break were measured.
A larger value indicates a higher strength or elongation.

<Tensile Test of Resin After Foam-Molding>

The foam-molded body was cut into a strip having a length of 63.5 mm and a width of 16 mm by using a sawing machine. At this time, in order to arrange the longitudinal direction of the original foam-molded body to become the length direction of the molded body after cutting, the cutting was performed from the central portion in the width direction of the original foam-molded body and from the portion located at half on the gate side in the length direction. Subsequently, the obtained strip-like molded body was cut using a sample piece preparing machine, Model IDT-3, manufactured by Toyo Baldwin to obtain a dumbbell-shaped test piece having a parallel-part length of 20 mm, a parallel-part width of 8

mm, and a test piece length of 80 mm. The obtained test piece was subjected to a tensile test under the conditions of a tensile speed of 50 mm/min by using a tensile tester, STROGRAPH Model VG10-E, manufactured by Toyo Seiki Seisaku-Sho, Ltd. to measure the elongation at break. A larger value indicates a higher elongation.

<Henry's Constant>

The resin is thoroughly dried and then pressurized and depressurized at a predetermined temperature (for example, from 180 to 280°C) by using a molding machine (for example, a desktop molding press manufactured by Imoto Machinery Co., Ltd.) to prepare a bubbleless test piece (for example, 20 mmϕ, thickness: from 1 to 3 mm), and the change in mass when carbon dioxide is incorporated into the sample in a carbon dioxide atmosphere at a temperature of 200°C and a pressure of 5 to 20 MPa is measured using a magnetic suspension balance system (BEL P/O 152, manufactured by RUBOTHERM, Germany), whereby the solubility of carbon dioxide for resin can be determined.

The gas solubility C (g (carbon dioxide)/g (resin composition) of carbon dioxide for resin determined by the technique above and the pressure P (MPa) were fitted by a least square method to the relational expression C=kP of Henry's law to determine the Henry's constant k.

Incidentally, in the following Production Examples 1 to 7, isosorbide used for reaction is produced by Roquette Freres or by Sanko Chemical Co., Ltd.; 1,4-cyclohexanedimethanol is produced by Eastman Chemical Co.; diphenyl carbonate is produced by Mitsubishi Chemical Corp.; tricyclodecanedimethanol is produced by Celanese Ltd.; and cesium carbonate, calcium acetate monohydrate and 1,6-hexanediol are produced by Wako Pure Chemical Industries Ltd.

Also, abbreviations for compounds used in Production Examples 1 to 7 are as follows.
ISB: isosorbide
1,4-CHDM: 1,4-cyclohexanedimethanol
TCDDM: tricyclodecanedimethanol
1,6-HD: 1,6-hexanediol
DPC: diphenyl carbonate

<Production Example 1: Production of Polycarbonate Copolymer (PC-1)>

The copolymer was produced as follows in accordance with the method described in Example 1 of JP-A-2009-161746.

A reaction vessel was charged with 13.0 parts by mass (0.246 mol) of 1,4-CHDM, 59.2 parts by mass (0.752 mol) of DPC, and $2.21\times10^{-4}$ parts by mass ($1.84\times10^{-6}$ mol) of cesium carbonate as a catalyst, per 27.7 parts by mass (0.516 mol) of ISB, and in a nitrogen atmosphere, as a first step of reaction, a heating bath was heated at temperature of 150°C to dissolve the raw materials, if desired, with stirring (about 15 minutes).

Subsequently, the pressure was reduced from ordinary pressure to 13.3 kPa (absolute pressure; hereinafter, the same) and while raising the heating bath temperature to 190°C over 1 hour, phenol being produced was withdrawn out of the reaction vessel.

After holding the whole reaction vessel at 190°C for 15 minutes, as a second step, the pressure in the reaction vessel was reduced to 6.67 kPa, and while raising the heating bath temperature was raised to 230°C over 15 minutes, phenol being produced was withdrawn out of the reaction vessel. The stirring torque of the stirrer was increased and therefore, the temperature was raised to 250°C over 8 minutes. For removing further produced phenol, the pressure in the reaction vessel was adjusted to 0.200 kPa or less, and after reaching a predetermined stirring torque, the reaction was terminated. The reaction product obtained was extruded in water to obtain a pellet of Polycarbonate Copolymer (PC-1).

The Henry's constant of carbon dioxide at 200°C for the obtained Polycarbonate Copolymer (PC-1) was $3.4\times10^{-3}$ g (carbon dioxide)/g (resin composition)•MPa, the reduced viscosity was 1.007 dl/g, the glass transition temperature was 124°C, and the color value b was 8.8.

Furthermore, this Polycarbonate Copolymer (PC-1) was molded at 245°C and a mold temperature of 90°C to obtain a test piece (two kinds) for evaluation of mechanical properties. Evaluations of mechanical properties were performed using these test pieces, as a result, the tensile strength at yield was 84 MPa, the tensile modulus at yield was 748 MPa, the elongation at yield was 16%, the elongation at break was 30%, and the Izod impact strength was 227 $J/m^2$.

Also, the 5% thermal weight loss temperature of Polycarbonate Copolymer (PC-1) in a nitrogen atmosphere was 344°C. The amount of evolved gas except for a phenol component was 3.7 $ng/cm^2$, and an evolved gas derived from dihydroxy compounds except for the dihydroxy compound represented by formula (1) was not detected.

<Production Example 2: Production of Polycarbonate Copolymer (PC-2)>

Production was performed in the same manner as in Production Example 1 except for changing the added amounts to 19.7 parts by mass (0.363 mol) of ISB, 21.6 parts by mass (0.404 mol) of 1,4-CHDM, 58.8 parts by mass (0.741 mol) of DPC, and $2.19\times10^{-4}$ parts by mass ($1.82\times10^{-6}$ mol) of cesium carbonate as a catalyst.
The Henry's constant of carbon dioxide at 200°C for the obtained Polycarbonate Copolymer (PC-2) was $3.7\times10^{-3}$ g (carbon dioxide)/g (resin composition)•MPa, the reduced viscosity was 1.196 dl/g, the glass transition temperature was 101°C, and the color value b was 7.7.
Furthermore, this Polycarbonate Copolymer (PC-2) was molded at 245°C and a mold temperature of 80°C to obtain a test piece (two kinds) for evaluation of mechanical properties. Evaluations of mechanical properties were performed using these test pieces, as a result, the tensile strength at yield was 66 MPa, the tensile modulus at yield was 595 MPa, the elongation at yield was 16%, the elongation at break was 27%, and the Izod impact strength was 293 J/m$^2$. The 5% thermal weight loss temperature of Polycarbonate Copolymer (PC-2) in a nitrogen atmosphere was 345°C.

<Production Example 3: Production of Polycarbonate Copolymer (PC-3)>

The copolymer was produced as follows in accordance with the method described in Example 13 of JP-A-2009-161746.
A reaction vessel was charged with 15.8 parts by mass (0.211 mol) of TCDDM, 57.4 parts by mass (0.704 mol) of DPC, and $2.14\times10^{-4}$ parts by mass ($1.73\times10^{-6}$ mol) of cesium carbonate as a catalyst, per 26.9 parts by mass (0.483 mol) of ISB, and in a nitrogen atmosphere, as a first step of reaction, a heating bath was heated at temperature of 150°C to dissolve the raw materials, if desired, with stirring (about 15 minutes).
Subsequently, the pressure was reduced from ordinary pressure to 13.3 kPa over 40 minutes and while raising the heating bath temperature to 190°C over 40 minutes, phenol being produced was withdrawn out of the reaction vessel.
After holding the whole reaction vessel at 190°C for 15 minutes, as a second step, the heating bath temperature was raised to 220°C over 30 minutes, and 10 minutes after the temperature rise, the pressure in the reaction vessel was reduced to 0.200 kPa or less over 30 minutes to distill out the produced phenol. The reaction was terminated after reaching a predetermined stirring torque, and the reaction product obtained was extruded in water to obtain a pellet of a polycarbonate copolymer.
The reduced viscosity of the obtained Polycarbonate Copolymer (PC-3) was 0.640 dl/g, the glass transition temperature was 126°C, and the color value b was 4.6.
Furthermore, this Polycarbonate Copolymer (PC-3) was molded at 245°C and a mold temperature of 90°C to obtain a test piece (two kinds) for evaluation of mechanical properties. Evaluations of mechanical properties were performed using these test pieces, as a result, the tensile strength at yield was 89 MPa, the tensile modulus at yield was 834 MPa, the elongation at yield was 15%, the elongation at break was 76%, and the Izod impact strength was 48 J/m$^2$.
Also, the 5% thermal weight loss temperature of Polycarbonate Copolymer (PC-3) in a nitrogen atmosphere was 348°C.
In addition, the amount of evolved gas except for a phenol component was 4.5 ng/cm$^2$, and an evolved gas derived from dihydroxy compounds except for the dihydroxy compound represented by formula (1) was not detected. The pencil hardness was F.

<Production Example 4: Production of Polycarbonate Copolymer (PC-4)>

Production was performed in the same manner as in Production Example 3 except for changing the added amounts to 25.6 parts by mass (0.333 mol) of TCDDM, 55.8 parts by mass (0.666 mol) of DPC, and $2.08\times10^{-4}$ parts by mass ($1.63\times10^{-6}$ mol) of cesium carbonate as a catalyst, per 18.7 parts by mass (0.327 mol) of ISB.
The reduced viscosity of the obtained Polycarbonate Copolymer (PC-4) was 0.785 dl/g, the glass transition temperature was 110°C, and the color value b was 4.7.
Furthermore, this Polycarbonate Copolymer (PC-4) was molded at 245°C and a mold temperature of 90°C to obtain a test piece (two kinds) for evaluation of mechanical properties. Evaluations of mechanical properties were performed using these test pieces, as a result, the tensile strength at yield was 79 MPa, the tensile modulus at yield was 807 MPa, the elongation at yield was 13%, the elongation at break was 18%, and the Izod impact strength was 58 J/m$^2$.
Also, the 5% thermal weight loss temperature of Polycarbonate Copolymer (PC-4) in a nitrogen atmosphere was 349°C.

<Production Example 5: Production of Polycarbonate Copolymer (PC-5)>

The copolymer was produced as follows in accordance with the method described in Example 1 of JP-A-2011-111614.

A polymerization reaction apparatus having a stirring blade and a reflux condenser controlled to 100°C was charged with ISB, 1,6-HD, DPC adjusted to a chloride ion concentration of 10 ppb or less by distillation purification, and calcium acetate monohydrate in a molar ratio of ISB/1,6-HD/DPC/calcium acetate monohydrate = 0.85/0.15/1.00/2.0$\times 10^{-6}$ and thoroughly purged with nitrogen (oxygen concentration: from 0.0005 to 0.001 vol%). Subsequently, heating was performed with a heating medium and when the internal temperature reached 140°C, stirring was initiated. The internal temperature rose to 210°C in 40 minutes after the initiation of temperature rise and when the internal temperature reached 210°C, the system was controlled to hold this temperature. At the same time, pressure reduction was initiated, and the pressure was reduced to 13.3 kPa in 90 minutes after reaching 210°C. While keeping this pressure, the system was further held for 30 minutes. Phenol vapor produced as a by-product along with the polymerization reaction was introduced into the reflux condenser at 100°C, a small amount of a monomer component contained in the phenol vapor was returned to the polymerization reactor, and the uncondensed phenol vapor was successively introduced into a condenser at 45°C and recovered.

After once restoring atmospheric pressure with nitrogen, the contents oligomerized as above were transferred to another polymerization reaction apparatus having a stirring blade and a reflux condenser controlled to 100°C, and temperature rise and pressure reduction were initiated. An internal temperature of 230°C and a pressure of 200 Pa were reached in 50 minutes and thereafter, the pressure was reduced to 133 Pa or less over 20 minutes. When a predetermined stirring power was achieved, the pressure was restored with nitrogen, and the contents were withdrawn in a strand form and pelletized by a rotary cutter.

The reduced viscosity of the obtained Polycarbonate Copolymer (PC-5) was 0.4299 dl/g, the glass transition temperature was 122°C, and the color value b was 12.22.

<Production Example 6: Production of Polycarbonate Copolymer (PC-6)>

Production was performed in the same manner as in Production Example 5 except for charging the raw materials in a molar ratio of ISB/1,6-HD/DPC/calcium acetate monohydrate = 0.70/0.30/1.00/2.0$\times 10^{-6}$.

The reduced viscosity of the obtained Polycarbonate Copolymer (PC-6) was 0.4655 dl/g, the glass transition temperature was 86°C, and the color value b was 15.10.

<Production Example 7: Production of Polycarbonate (Homopolymer) (PC-7)>

The polymer was produced as follows in accordance with the method described in Example 27 of JP-A-2009-161746.

A reaction vessel was charged with 59.9 parts by mass (0.592 mol) of DPC and 2.23$\times 10^{-4}$ parts by mass (1.45$\times 10^{-6}$ mol) of cesium carbonate as a catalyst, per 40.1 parts by mass (0.581 mol) of ISB, and heated with stirring to 150°C from room temperature to dissolve the raw materials (about 15 minutes).

Subsequently, the pressure was reduced from ordinary pressure to 13.3 kPa and while raising the temperature to 190°C over 1 hour, phenol being produced was withdrawn out of the system. After holding the system at 190°C for 15 minutes, the pressure in the reactor was set to 6.67 kPa, and the heating bath temperature was raised to 230°C over 15 minutes to remove the produced phenol. The stirring torque was increased and therefore, the temperature was raised to 250°C over 8 minutes. For removing further produced phenol, the degree of vacuum was adjusted to 0.200 kPa or less, and after reaching a predetermined stirring torque, the reaction was terminated. It was attempted to extrude the reaction product in water and obtain a pellet, but the reaction product could not be extruded and therefore, was taken out as a lump.

The Henry's constant of carbon dioxide at 200°C for the obtained Polycarbonate Copolymer (PC-7) was 2.6$\times 10^{-3}$ g (carbon dioxide)/g (resin composition)•MPa, the reduced viscosity was 0.679 dl/g, the glass transition temperature was 160°C, and the color value b was 13.0. As compared with Production Examples 1 to 7, the value b is high, and the polymer was colored brown.

Furthermore, this Polycarbonate Copolymer (PC-7) was molded at 265°C to obtain a test piece (two kinds) for evaluation of mechanical properties. Evaluations of mechanical properties were performed using these test pieces, as a result, the tensile strength at yield was 105 MPa, the tensile modulus at yield was 353 MPa, the elongation at yield was 17%, the elongation at break was 31%, and the Izod impact strength was 11 $J/m^2$. It is seen that as compared with Production Examples 1 to 7, the Izod impact strength was significantly low.

Also, the 5% thermal weight loss temperature of Polycarbonate Copolymer (PC-7) in a nitrogen atmosphere was 339°C.

<Examples 1-1 to 1-6 and Comparative Example 1-1>

Each of the resins obtained in Production Examples 1 to 7 was vacuum-dried at 80°C for 12 hours and then press-molded (reference example) at 180 to 230°C to produce a sheet having a thickness of 1 mm. The produced sheet was cut into a 30-mm square and used as a test piece. The test piece was vacuum-dried at 80°C for 6 hours and after measuring the density, charged into a pressure vessel at room temperature. The inside of the vessel was purged with carbon dioxide and then pressurized to 10 MPa to impregnate the test piece with carbon dioxide. After passing of 2 hours and 30 minutes, the leak valve of the pressure vessel was opened, and the pressure was gradually reduced to atmospheric pressure. Thereafter, the test piece was taken out from the pressure vessel, and the test piece taken out was dipped in an oil bath heated around +20°C of the glass transition temperature (Tg) for 1 minute to achieve foaming and then dipped in water, thereby stopping the foaming. The foam-molded body was taken out, and the foam-molded body taken out was dried at 80°C for 12 hours and then measured for the density.

The composition of each resin, the glass transition temperature (Tg), the temperature of oil bath used for foam-molding, the difference between oil bath temperature and Tg, the density (g/$cm^3$), and the expansion ratio are shown in Table 1.

Incidentally, the expansion ratio is a value obtained by measurement of Expansion Ratio 1.

The composition of the polycarbonate resin, the molding conditions, and the characteristics of the foam-molded body are shown in Table 2. Incidentally, the "Elongation at Break of Polycarbonate Resin" is a value obtained by measuring the elongation at break of resin before foam-molding by the method described in the specification.

[Table 1]

Table 1

| | Polycarbonate | Composition | Tg | Oil Bath Temperature | Difference between Tg and Oil Bath Temperature | Density | | Expansion Ratio |
|---|---|---|---|---|---|---|---|---|
| | | | | | | Before Foaming | After Foaming | |
| Example 1-1 | PC-1 | ISB:CHDM=68:32 | 124°C | 145°C | 21°C | 1.371 | 0.992 | 1.38 |
| Example 1-2 | PC-2 | ISB:CHDM=47:53 | 101°C | 125°C | 24°C | 1.304 | 0.639 | 2.04 |
| Example 1-3 | PC-3 | ISB:TCDDM=70:30 | 126°C | 145°C | 19°C | 1.353 | 0.777 | 1.74 |
| Example 1-4 | PC-4 | ISB:TCDDM=50:50 | 110°C | 125°C | 15°C | 1.298 | 0.374 | 3.47 |
| Example 1-5 | PC-5 | ISB:1,6-HD=85:15 | 122°C | 145°C | 23°C | 1.417 | 1.013 | 1.4 |
| Example 1-6 | PC-6 | ISB:1,6-HD=10:30 | 86°C | 105°C | 19°C | 1.376 | 0.392 | 3.51 |
| Comparative Example 1-1 | PC-7 | ISB=100 | 160°C | 180°C | 20°C | 1.438 | 1.341 | 1.07 |

[Table 2]

Table 2

| | Polycarbonate Resin | | | Molding Conditions | | | | Foam-Molded Body | | | |
|---|---|---|---|---|---|---|---|---|---|---|---|
| | Kind | Composition | Elongation at Break | Molding Temperature | Physical Foaming Agent | Amount of Faming Agent Injected | Mold Opening Amount | Thickness of Molded Article | Expansion Ratio | Density | Elongation at Break |
| | | | % | °C | | parts by mass | mm | mm | times | $g/cm^3$ | % |
| Example 1-1 | PC-1 | ISB: CHDM=68: 32 | 30 | 250 | nitrogen | 0.8 | 2.5 | 4 | 2.7 | 0.487 | 13.7 |
| Example 1-2 | PC-2 | ISB: CHDM=47: 53 | 27 | 250 | nitrogen | 0.8 | 2.5 | 4 | 2.7 | 0.448 | 5.8 |
| Comparative Example 1-1 | PC-7 | ISB=100 | 31 | 250 | nitrogen | 0.8 | 2.5 | 4 | 2.7 | - | 2.3 |

It is seen from Table 1 that polycarbonate copolymers of Examples 1-1 to 1-6 (a polycarbonate having a structural unit derived from isosorbide and a structural unit derived from other dihydroxy compounds) exhibit an excellent foaming performance at 1.4 to 3.5 times at a temperature higher by approximately from 15 to 24°C than the glass transition temperature (Tg). Also, the molded bodies (foam-molded bodies) obtained in Examples 1-1 to 1-6 have excellent mechanical properties.

On the other hand, in PC-7 (homopolymer of isosorbide) of Comparative Example 1-1, the expansion ratio at a temperature (180°C) higher by 20°C than the glass transition temperature (Tg) is 1.07, and it is seen that the foaming performance of the polymer is significantly poorer as compared with Examples 1-1 to 1-6.

The result above is considered to occur because the gas solubility of the copolymer of isosorbide and other dihydroxy compounds was increased as compared with the isosorbide homopolymer.

Comparative Example 1-1 corresponds to Example 1 or 2 of Patent Document 3 (JP-A-2009-964). In Patent Document 3, the "density" of Examples 1 and 2 (a foam-molded article of an isosorbide homopolymer) is proved to be "650 kg/m$^3$ in Example 1" and "590 kglm$^3$ in Example 2", but these results are attributable to using a liquefied butane gas having higher solubility for resin than carbon dioxide (paragraph [0098] and [Table 2] in paragraph [0100] of Patent Document 3), unlike Comparative Example 1 in the description of the present invention where carbon dioxide is used as the foaming agent. In this connection, it is seen that among polycarbonates having a structural unit derived from isosorbide, a polycarbonate copolymer having a structural unit derived from other dihydroxy compounds, particularly a polycarbonate copolymer having a glass transition temperature (Tg) in the specific range, can provide for a foam-molded body having such a high expansion ratio that the density is from 0.374 to 1.013 g/cm$^3$ even when carbon dioxide lower in the solubility than butane is used as the foaming agent.

Here, the glass transition temperature (Tg) of the polycarbonate (Component A-1) used in Example 1 of Patent Document 3 is 156°C, and the glass transition temperature (Tg) of the polycarbonate (Component A-2) used in Example 2 is 164°C (paragraphs [0090] to [0093] of Patent Document 3).

In this way, it is understood from Patent Document 3 that the polycarbonate having a structural unit derived from isosorbide has a high glass transition temperature (Tg) and its extrusion foam-molding requires a temperature as high as 250°C. On the other hand, among polycarbonates having a structural unit derived from isosorbide, a polycarbonate copolymer having a structural unit derived from other dihydroxy compounds, particularly a polycarbonate copolymer having a glass transition temperature (Tg) in the specific range, is foam-molded and therefore, foam-molding at a low temperature as compared with the isosorbide homopolymer is considered to be able to be performed.

Also, the glass transition temperature (Tg) of the polycarbonate (Component A-4) in Production Example 4 of Patent Document 3 is 138°C (paragraph [0095] of Patent Document 3). This Component A-4 is proved to be "incapable of uniform foaming" at 230°C (Comparative Example 5 in paragraph [0099] of Patent Document 3). Comparative Example 5 of Patent Document 3 is considered to reveal that the viscosity is low because of such a low glass transition temperature and therefore, the bubble-holding property is bad, making it impossible to perform uniform foaming (that is, the foamability is bad).

On the other hand, as described above, it has been found that among polycarbonates having a structural unit derived from isosorbide, a polycarbonate copolymer having a structural unit derived from other dihydroxy compounds, particularly a polycarbonate copolymer having a glass transition temperature (Tg) in the specific range, can provide for a foamed body having good gas solubility and impact resistance and being lightweight and excellent in mechanical strength. This fact is unexpected and utterly different from the fact disclosed in Patent Document 3, namely, for example, that among polycarbonates having a structural unit derived from isosorbide, when a polycarbonate having a melt viscosity in the specific range is foam-molded in a specific temperature range, a foam-molded article excellent in the heat resistance and mechanical properties is provided, in other words, among isosorbide homopolymers, a homopolymer having a high glass transition temperature (Tg) requires foam-molding at a high temperature because of its high melt viscosity and bad flowability, involving thermal decomposition of the resin, whereas among isosorbide homopolymers, a homopolymer having a low glass transition temperature (Tg) is incapable of uniform foaming due to its low melt viscosity and poor foamability.

[Examples 2-1 to 2-4 and Comparative Examples 2-1 to 2-4]

<Examples 2-1 and 2-2: Foam-Molding of Polycarbonate Copolymer (PC-1)>

The polycarbonate pellet of Production Example 1 was charged into the hopper of a MuCell injection molding machine, "J85AD-Mucell", manufactured by JSW, and in the metering process, a physical foaming agent (nitrogen or carbon dioxide) was introduced (injected) inside the cylinder (resin melting part) under pressure as shown in Table 3 to mix molten PC-1 and the physical foaming agent. Subsequently, the mixture was injected into a plate-shaped mold of 1.5 mm (thickness) × 100 mm (width) × 180 mm (length) and almost at the same time as the completion of filling (within 0.1 seconds before or after the completion of filling), the movable plate of the mold was retreated (core back) by a

predetermined stroke amount (mold opening amount) to perform expansion of the cavity, thereby achieving foam-molding. By cooling the cavity as it is for 60 seconds, a foam-molded body was obtained. In this case, the "thickness of mold before expansion of cavity" used for calculation of the expansion ratio was 1.5 mm. The time taken from the initiation of injection to the completion of filling was set to 1.0 seconds, and the time taken to retreat the movable plate of the mold was set to 0.1 seconds. Also, the mold temperature was adjusted to 60°C.

In Table 3, the expansion ratio is a value obtained by measurement of Expansion Ratio 2.

The results are shown in Table 3.

<Examples 2-3 and 2-4: Foam-Molding of Polycarbonate Copolymer (PC-2)>

Foam-molding was performed in the same manner as in Examples 2-1 and 2-2 except for using Polycarbonate Copolymer (PC-2) of Production Example 2.

The results are shown in Table 3. Incidentally, in the column of "Suitability for Foam-Molding" of Table 3, "B" of Example 2-4 indicates that molding was possible but chipping of molded article or surface roughening was generated in a part of the molded article.

<Comparative Examples 2-1 and 2-2: Foam-Molding of Polycarbonate Copolymer (PC-7)>

Foam-molding was performed in the same manner as in Examples 2-1 and 2-2 except for using Polycarbonate Copolymer (PC-7) of Production Example 7.

The results are shown in Table 3.

<Comparative Example 2-3: Foam-Molding of Polycarbonate S2000R (bisphenol A-type PC)>

A bisphenol A-type polycarbonate, "S2000R", produced by Mitsubishi Engineering-Plastics Corporation was foam-molded in the same manner as in Examples 2-1 and 2-2. The obtained molded body particularly at the end part on the downstream side of the molten resin inflow had resin chipping or surface roughening presumed to be attributable to gas escape, and this was observed almost throughout the molded article. Thus, the molded article could not withstand practical use.

The results are shown in Table 3.

<Comparative Example 2-4: Foam-Molding of Polycarbonate 7022IR (bisphenol A-type PC)>

A bisphenol A-type polycarbonate, "7022IR", produced by Mitsubishi Engineering-Plastics Corporation was foam-molded in the same manner as in Examples 2-1 and 2-2. The obtained molded body particularly at the end part on the downstream side of the molten resin inflow had resin chipping or surface roughening presumed to be attributable to gas escape, and this was observed almost throughout the molded article. Thus, the molded article could not withstand practical use.

The results are shown in Table 3.

Criteria for evaluation of "Suitability for Foam-Molding":

A: The foamed article was free of chipping or surface roughening, and molding was possible.
B: Molding was possible, but chipping of molded article or surface roughening was generated in a part of the molded article.
C: Chipping of molded article or surface roughening was generated in the molded article, and molding was impossible.

[Table 3]

Table 3

| | Polycarbonate Resin | | | Molding Conditions | | | | Molded Body | | |
|---|---|---|---|---|---|---|---|---|---|---|
| | Kind | Composition | Henry's Constant | Molding Temperature | Physical Foaming Agent | Amount of Foaming Agent Injected | Mold Opening Amount | Suitability for Foam-Molding | Thickness of Molded Article | Expansion Ratio |
| | | | g (carbon dioxide) /g (resin composition) •MPa | °C | | parts by mass | mm | | mm | times |
| Example 2-1 | PC-1 | ISB: CHDM=68: 32 | $3.4\times10^{-3}$ | 250 | nitrogen | 0.8 | 3 | A | 4.5 | 3 |
| Example 2-2 | PC-1 | ISB: CHDM=68: 32 | $3.4\times10^{-3}$ | 250 | carbon dioxide | 1.7 | 6 | A | 7.5 | 5 |
| Example 2-3 | PC-2 | ISB: CHDM=47: 53 | $3.7\times10^{-3}$ | 250 | nitrogen | 0.8 | 1.5 | A | 3 | 2 |
| Example 2-4 | PC-2 | ISB : CHDM=47: 53 | $3.7\times10^{-3}$ | 250 | nitrogen | 0.8 | 3 | B | 4.5 | 3 |
| Comparative Example 2-1 | PC-7 | ISB=100 | $2.6\times10^{-3}$ | 250 | nitrogen | 0.8 | 3 | A | 4.5 | 3 |
| Comparative Example 2-2 | PC-7 | ISB=100 | $2.6\times10^{-3}$ | 250 | nitrogen | 0.8 | 6 | A | 7.5 | 5 |
| Comparative Example 2-3 | S2000R | BPA-PC | $3.5\times10^{-3}$ | 300 | carbon dioxide | 1.7 | 3 | C | - | - |
| Comparative Example 2-4 | 7022IR | BPA-PC | $3.5\times10^{-3}$ | 300 | nitrogen | 0.8 | 3 | C | - | - |

<Examples 3-1 and 3-2: Foam-Molding (Core-Back Method) of Polycarbonate Copolymer (PC-1)>

The polycarbonate pellet of Production Example 1 was charged into the hopper of a MuCell injection molding machine, "J85AD-Mucell", manufactured by JSW, and in the metering process, a physical foaming agent (nitrogen or carbon dioxide) was introduced (injected) inside the cylinder (resin melting part) under pressure as shown in Table 4 to mix molten PC-1 and the physical foaming agent. In all of Examples and Comparative Examples, the metering stroke was set to a value for receiving a full shot when injected into a plate-shaped mold of 1.5 mm (thickness) × 100 mm (width) x 180 mm (length). Subsequently, the mixture was injected into a plate-shaped mold of 1.5 mm (thickness) × 100 mm (width) × 180 mm (length) and almost at the same time as the completion of filling (within 0.1 seconds before or after the completion of filling), the movable plate of the mold was retreated (core back) by a predetermined stroke amount (mold opening amount) to perform expansion of the cavity, thereby achieving foam-molding. By cooling the cavity as it is for 60 seconds, a foam-molded body was obtained. In this case, the "thickness of mold before expansion of cavity" used for calculation of the expansion ratio was 1.5 mm. The time taken from the initiation of injection to the completion of filling was set to 1.0 seconds, and the time taken to retreat the movable plate of the mold was set to 0.1 seconds. Also, the mold temperature was adjusted to 60°C.

The results are shown in Table 4. Incidentally, in the core-back method, Mold Thickness in the Table indicates the "thickness of mold before expansion of cavity".

Also, in Table 4, the expansion ratio is a value obtained by measurement of Expansion Ratio 3.

<Examples 3-3 and 3-4: Foam-Molding (Core-Back Method) of Polycarbonate Copolymer (PC-2)>

Foam-molding was performed in the same manner as in Examples 3-1 and 3-2 except for using Polycarbonate Copolymer (PC-2) of Production Example 2.

The results are shown in Table 4. Incidentally, in the column of "Suitability for Foam-Molding" of Table 4, "B" of Example 3-4 indicates that molding was possible but chipping of molded article or surface roughening was generated in a part of the molded article.

<Comparative Examples 3-1 and 3-2: Foam-Molding (Core-Back Method) of Polycarbonate (PC-7)>

Foam-molding was performed in the same manner as in Examples 3-1 and 3-2 except for using Polycarbonate (PC-7) of Production Example 7.

The results are shown in Table 4.

<Comparative Example 3-3: Foam-Molding (Core-Back Method) of Polycarbonate S2000R (bisphenol A-type PC)>

A bisphenol A-type polycarbonate, "S2000R", produced by Mitsubishi Engineering-Plastics Corporation was foam-molded in the same manner as in Examples 3-1 and 3-2. The obtained molded body particularly at the end part on the downstream side of the molten resin inflow had resin chipping or surface roughening presumed to be attributable to gas escape, and this was observed almost throughout the molded article. Thus, the molded article could not withstand practical use.

The results are shown in Table 4.

<Comparative Example 3-4: Foam-Molding (Core-Back Method) of Polycarbonate 7022IR (bisphenol A-type PC)>

A bisphenol A-type polycarbonate, "7022IR", produced by Mitsubishi Engineering-Plastics Corporation was foam-molded in the same manner as in Examples 3-1 and 3-2. The obtained molded body particularly at the end part on the downstream side of the molten resin inflow had resin chipping or surface roughening presumed to be attributable to gas escape, and this was observed almost throughout the molded article. Thus, the molded article could not withstand practical use.

The results are shown in Table 4.

<Examples 3-5 and 3-6 (reference): Foam Molding (Short-Shot Method) of Polycarbonate Copolymer (PC-1)>

The polycarbonate pellet of Production Example 1 was charged into the hopper of a MuCell injection molding machine, "J85AD-Mucell", manufactured by JSW, and in the metering process, a physical foaming agent (nitrogen or carbon dioxide) was introduced (injected) inside the cylinder (resin melting part) under pressure as shown in Table 4 to mix molten PC-1 and the physical foaming agent. Subsequently, the mixture was injected into a plate-shaped mold of thickness shown in Table 4 × 100 mm (width) × 180 mm (length) and cooled as it is for 60 seconds to obtain a foam-molded body. This is foam molding by a method of receiving a short shot while leaving an unfilled part in the mold, and filling the unfilled part by an expansion force due to foaming of the foaming agent to perform molding (short-shot method). In this case, the "thickness of mold capable of receiving full shot" used for calculation of the expansion ratio was 1.5 mm. The time taken from the initiation of injection to the completion of filling was set to 1.0 seconds. Also, the mold temperature was adjusted to 60°C.

The results are shown in Table 4. Incidentally, in the column of "Suitability for Foam-Molding" of Table 4, "C" of Example 3-6 indicates that foam-molding was possible but the filling amount of the unfilled part by an expansion force due to foaming of the foaming agent was insufficient and in the foam-molded body, the resin was short of filling the end part on the downstream side of the molten resin inflow.

<Examples 3-7 and 3-8 (reference): Foam Molding (Short-Shot Method) of Polycarbonate Copolymer (PC-2)>

Foam-molding was performed in the same manner as in Examples 3-5 and 3-6 except for using Polycarbonate Copolymer (PC-2) of Production Example 2.

The results are shown in Table 4. Incidentally, in the column of "Suitability for Foam-Molding" of Table 4, "C" of Example 3-8 indicates that foam-molding was possible but the filling amount of the unfilled part by an expansion force due to foaming of the foaming agent was insufficient and in the foam-molded body, the resin was short of filling the end part on the downstream side of the molten resin inflow.

Criteria for evaluation of "Suitability for Foam-Molding":

A: The foamed article was free of chipping or surface roughening, and molding was possible.
B: Molding was possible, but chipping of molded article or surface roughening was generated in a part of the molded article.
C: Chipping of molded article or surface roughening was generated in the molded article, and molding was impossible.

[Table 4]

Table 4

| | Polycarbonate Resin | | | | | | | | | | |
|---|---|---|---|---|---|---|---|---|---|---|---|
| | Kind | Composition | Temperature | Physical Foaming Agent | Amount of Foaming Agent Injected | Foaming Method | Thickness of Mold | Mold Opening Amount | Suitability for Foam-Molding | Thickness of Molded Article | Expansion Ratio |
| | | | °C | | parts by mass | core-back method | mm | mm | | mm | |
| Example 3-1 | PC-1 | ISB: CHDM=68: 32 | 250 | nitrogen | 0.8 | core-back method | 1.5 | 3 | A | 4.5 | 3 |
| Example 3-2 | PC-1 | ISB: CHDM=68: 32 | 250 | carbon dioxide | 1.7 | core-back method | 1.5 | 6 | A | 7.5 | 5 |
| Example 3-3 | PC-2 | ISB: CHDM=47: 53 | 250 | nitrogen | 0.8 | core-back method | 1.5 | 1.5 | A | 3 | 2 |
| Example 3-4 | PC-2 | ISB: CHDM=47: 53 | 250 | nitrogen | 0.8 | core-back method | 1.5 | 3 | B | 4.5 | 3 |
| Comparative Example 3-1 | PC-7 | ISB=100 | 250 | nitrogen | 0.8 | core-back method | 1.5 | 3 | A | 4.5 | 3 |
| Comparative Example 3-2 | PC-7 | ISB=100 | 250 | nitrogen | 0.8 | core-back method | 1.5 | 6 | A | 7.5 | 5 |
| Comparative Example 3-3 | S2000R | BPA-PC | 300 | carbon dioxide | 1.7 | core-back method | 1.5 | 3 | C | - | - |

(continued)

| | Polycarbonate Resin | | | | | | | | | | |
|---|---|---|---|---|---|---|---|---|---|---|---|
| | Kind | Composition | Temperature | Physical Foaming Agent | Amount of Foaming Agent Injected | Foaming Method | Thickness of Mold | Mold Opening Amount | Suitability for Foam-Molding | Thickness of Molded Article | Expansion Ratio |
| | | | °C | | parts by mass | core-back method | mm | mm | | mm | |
| Comparative Example 3-4 | 7022IR | BPA-PC | 300 | nitrogen | 0.8 | core-back method | 1.5 | 3 | C | - | - |
| Example 3-5 | PC-1 | ISB: CHDM=68: 32 | 250 | carbon dioxide | 1.7 | short-shot method | 2.4 | - | A | 2.4 | 1.6 |
| Example 3-6 | PC-1 | ISB: CHDM=68: 32 | 250 | carbon dioxide | 1.7 | short-shot method | 3 | - | C | - | - |
| Example 3-7 | PC-2 | ISB: CHDM=47: 53 | 250 | carbon dioxide | 1.7 | short-shot method | 1.8 | - | A | 1.8 | 1.2 |
| Example 3-8 | PC-2 | ISB: CHDM=47: 53 | 250 | carbon dioxide | 1.7 | short-shot method | 2.4 | - | C | - | - |

While the invention has been described in detail and with reference to specific embodiments thereof, it will be apparent to one skilled in the art that various changes and modifications can be made therein without departing from the scope thereof, which is defined by the appended claims. This application is based on a Japanese patent application filed on August 31, 2011 (Application No. 2011-189681), a Japanese patent application filed on October 26, 2011 (Application No. 2011-235371) and a Japanese patent application filed on October 28, 2011 (Application No. 2011-236746) .

Industrial Applicability

The molded body obtained by the method of the present invention is not particularly limited in its utilization. field and can be used as an industrial material over a wide range of fields. The molded body is lightweight and excellent in the impact resistance and therefore, can be suitably used particularly for a building member, a packaging material, a container, a buffer material, an electric/electronic material, and an automobile member.

## Claims

1. A method for producing a foam-molded body of a resin composition comprising a step of foam-molding said resin composition by means of injection foaming involving expansion of a cavity using a foaming agent, said resin composition containing a polycarbonate copolymer having a structural unit derived from a dihydroxy compound represented by the following formula (1):

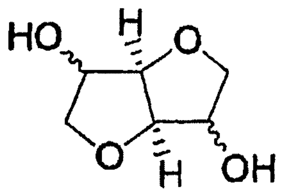

(1)

and a structural unit derived from other dihydroxy compounds, and having a glass transition temperature (Tg) of less than 145°C,
wherein the ratio of the structural unit derived from a dihydroxy compound represented by formula (1) to the structural units derived from all dihydroxy compounds contained in the polycarbonate copolymer is from 30 to 90 mol%, wherein the structural unit derived from other dihydroxy compounds is at least one structural unit selected from the group consisting of a structural unit derived from a dihydroxy compound represented by the following formula (2):

$$HO\text{-}R^1\text{-}OH \qquad (2)$$

wherein $R^1$ represents a substituted or unsubstituted cycloalkylene group having a carbon number of 4 to 20, a structural unit derived from a dihydroxy compound represented by the following formula (3):

$$HO\text{-}CH_2\text{-}R^2\text{-}CH_2\text{-}OH \qquad (3)$$

wherein $R^2$ represents a substituted or unsubstituted cycloalkylene group having a carbon number of 4 to 20, a structural unit derived from a dihydroxy compound represented by the following formula (4):

$$H\text{-}(O\text{-}R^3)_p\text{-}OH \qquad (4)$$

wherein $R^3$ represents a substituted or unsubstituted alkylene group having a carbon number of 2 to 10, and p is an integer of 2 to 50, and
a structural unit derived from a dihydroxy compound represented by the following formula (5):

$$HO\text{-}R^4\text{-}OH \qquad (5)$$

wherein $R^4$ represents a substituted or unsubstituted alkylene group having a carbon number of 2 to 20 or a group containing a substituted or unsubstituted acetal ring, wherein the timing of starting expansion of the cavity

is within 0.1 seconds before or after the completion of filling; and
wherein the foaming agent is an inorganic gas.

2. The method according to claim 1, wherein the structural unit derived from other dihydroxy compounds is at least one structural unit selected from the group consisting of cyclohexanedimethanols, tricyclodecanedimethanols and hexanediols.

3. The method according to claim 1 or 2, wherein the resin composition satisfies the following condition (1):

(1) the Henry's constant of carbon dioxide at 200°C for the resin composition is from $2.5\times10^{-3}$ to $4.0\times10^{-3}$ g (carbon dioxide)/g (resin composition)•MPa.

4. The method according to any one of claims 1 to 3, wherein the expansion ratio is from 1.1 to 100 times.

5. The method according to any one of claims 1 to 4, wherein the amount of the foaming agent is 0.1 parts by mass or more to 20 parts by mass or less per 100 parts by mass of the polycarbonate copolymer.

6. The method according to any one of claims 1 to 5, wherein the inorganic gas is nitrogen gas or carbon dioxide gas.

7. The method according to claim 5 or 6, wherein the cavity volume after expansion of the cavity is from more than 1.1 times to 20 times of the cavity volume at the completion of filling with the resin composition.

**Patentansprüche**

1. Ein Verfahren zur Herstellung eines Schaumformkörpers aus einer Harzzusammensetzung, umfassend einen Schritt des Schaumformens der Harzzusammensetzung mittels Schaumspritzgießen, welches die Expansion eines Hohlraumes beinhaltet, unter Verwendung eines Schaummittels, wobei die Harzzusammensetzung ein Polycarbonatcopolymer mit einer Struktureinheit abgeleitet von einer Dihydroxyverbindung, dargestellt durch die folgende Formel (1):

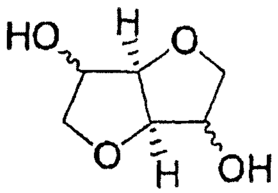

(1)

und einer Struktureinheit abgeleitet von anderen Dihydroxyverbindungen, und mit einer Glasübergangstemperatur (Tg) von weniger als 145°C enthält,
wobei das Verhältnis der Struktureinheit abgeleitet von einer Dihydroxyverbindung, dargestellt durch Formel (1) zu den Struktureinheiten abgeleitet von allen in dem Polycarbonatcopolymer enthaltenen Dihydroxyverbindungen 30 bis 90 Mol-% beträgt,
wobei die Struktureinheit abgeleitet von anderen Dihydroxyverbindungen mindestens eine Struktureinheit ist, ausgewählt aus der Gruppe bestehend aus einer Struktureinheit abgeleitet von einer Dihydroxyverbindung, dargestellt durch die folgende Formel (2):

$$HO\text{-}R^1\text{-}OH \qquad (2),$$

wobei $R^1$ eine substituierte oder unsubstituierte Cycloalkylengruppe mit einer Kohlenstoffzahl von 4 bis 20 darstellt,
eine Struktureinheit abgeleitet von einer Dihydroxyverbindung, dargestellt durch die folgende Formel (3):

$$HO\text{-}CH_2\text{-}R^2\text{-}CH_2\text{-}OH \qquad (3),$$

wobei $R^2$ eine substituierte oder unsubstituierte Cycloalkylengruppe mit einer Kohlenstoffzahl von 4 bis 20 darstellt,

eine Struktureinheit abgeleitet von einer Dihydroxyverbindung, dargestellt durch die folgende Formel (4):

$$H\text{-}(O\text{-}R^3)_P\text{-}OH \qquad (4),$$

wobei $R^3$ eine substituierte oder unsubstituierte Alkylengruppe mit einer Kohlenstoffzahl von 2 bis 10 darstellt und p eine ganze Zahl von 2 bis 50 ist, und
eine Struktureinheit abgeleitet von einer Dihydroxyverbindung, dargestellt durch die folgende Formel (5):

$$HO\text{-}R^4\text{-}OH \qquad (5),$$

wobei $R^4$ eine substituierte oder unsubstituierte Alkylengruppe mit einer Kohlenstoffzahl von 2 bis 20 oder eine Gruppe enthaltend einen substituierten oder unsubstituierten Acetalring darstellt,
wobei der Zeitpunkt des Beginns der Expansion des Hohlraums innerhalb von 0,1 Sekunden vor oder nach der Beendigung des Füllens liegt; und
wobei das Schaummittel ein anorganisches Gas ist.

2. Das Verfahren gemäß Anspruch 1, wobei die Struktureinheit abgeleitet von anderen Dihydroxyverbindungen mindestens eine Struktureinheit ist, ausgewählt aus der Gruppe bestehend aus Cyclohexandimethanolen, Tricyclodecandimethanolen und Hexandiolen.

3. Das Verfahren gemäß Anspruch 1 oder 2, wobei die Harzzusammensetzung die folgende Bedingung (1) erfüllt:

(1) die Henry-Konstante von Kohlenstoffdioxid bei 200°C für die Harzzusammensetzung beträgt $2{,}5\times10^{-3}$ bis $4{,}0\times10^{-3}$ g (Kohlenstoffdioxid)/g (Harzzusammensetzung)•MPa.

4. Das Verfahren gemäß einem der Ansprüche 1 bis 3, wobei das Expansionsverhältnis das 1,1- bis 100-fache beträgt.

5. Das Verfahren gemäß einem der Ansprüche 1 bis 4, wobei die Menge des Schaummittels 0,1 Massenteile oder mehr bis 20 Massenteile oder weniger pro 100 Massenteile des Polycarbonatcopolymers beträgt.

6. Das Verfahren gemäß einem der Ansprüche 1 bis 5, wobei das anorganische Gas Stickstoffgas oder Kohlendioxidgas ist.

7. Das Verfahren gemäß Anspruch 5 oder 6, wobei das Hohlraumvolumen nach der Expansion des Hohlraums mehr als das 1,1-fache bis 20-fache des Hohlraumvolumens bei Beendigung des Füllens mit der Harzzusammensetzung beträgt.

## Revendications

1. Méthode pour produire un corps moulé en mousse en une composition de résine comprenant une étape de moulage de mousse de ladite composition de résine au moyen d'un moussage par injection mettant en jeu l'expansion d'une cavité utilisant un agent moussant, ladite composition de résine contenant un copolymère de polycarbonate ayant un motif structurel dérivé d'un composé dihydroxy représenté par la formule (1) suivante :

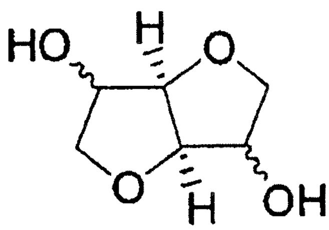

(1)

et un motif structurel dérivé d'autres composés dihydroxy, et ayant une température de transition vitreuse (Tg) inférieure à 145°C,
dans laquelle le rapport du motif structurel dérivé d'un composé dihydroxy représenté par la formule (1) aux

motifs structurels dérivés de tous les composés dihydroxy contenus dans le copolymère de polycarbonate est de 30 à 90 % en moles,
dans laquelle le motif structurel dérivé d'autres composés dihydroxy est au moins un motif structurel choisi dans l'ensemble constitué par un motif structurel dérivé d'un composé dihydroxy représenté par la formule (2) suivante :

$$HO\text{-}R^1\text{-}OH \qquad (2)$$

dans laquelle $R^1$ représente un groupe cycloalkylène substitué ou non substitué ayant de 4 à 20 carbones,
un motif structurel dérivé d'un composé dihydroxy représenté par la formule (3) suivante :

$$HO\text{-}CH_2\text{-}R^2\text{-}CH_2\text{-}OH \qquad (3)$$

dans laquelle $R^2$ représente un groupe cycloalkylène substitué ou non substitué ayant de 4 à 20 carbones,
un motif structurel dérivé d'un composé dihydroxy représenté par la formule (4) suivante :

$$H\text{-}(O\text{-}R^3)_p\text{-}OH \qquad (4)$$

dans laquelle $R^3$ représente un groupe alkylène substitué ou non substitué ayant de 2 à 10 carbones, et p est un entier de 2 à 50, et
un motif structurel dérivé d'un composé dihydroxy représenté par la formule (5) suivante :

$$HO\text{-}R^4\text{-}OH \qquad (5)$$

dans laquelle $R^4$ représente un groupe alkylène substitué ou non substitué ayant de 2 à 20 carbones ou un groupe contenant un cycle acétal substitué ou non substitué,
dans laquelle le moment du commencement de l'expansion de la cavité est de l'ordre de 0,1 seconde avant ou après l'achèvement du remplissage ; et
dans laquelle l'agent moussant est un gaz inorganique.

**2.** Méthode selon la revendication 1, dans laquelle le motif structurel dérivé d'autres composés dihydroxy est au moins un motif structurel choisi dans l'ensemble constitué par les cyclohexanediméthanols, les tricyclodécanediméthanols et les hexanediols.

**3.** Méthode selon la revendication 1 ou 2, dans laquelle la composition de résine satisfait à la condition (1) suivante :

(1) la constante de Henry du dioxyde de carbone à 200°C pour la composition de résine est de 2,5 x $10^{-3}$ à 4,0 x $10^{-3}$ g (dioxyde de carbone) / g (composition de résine) • MPa.

**4.** Méthode selon l'une quelconque des revendications 1 à 3, dans laquelle le taux d'expansion est de 1,1 à 100 fois.

**5.** Méthode selon l'une quelconque des revendications 1 à 4, dans laquelle la quantité de l'agent moussant est de 0,1 partie en masse ou plus à 20 parties en masse ou moins pour 100 parties en masse du copolymère de polycarbonate.

**6.** Méthode selon l'une quelconque des revendications 1 à 5, dans laquelle le gaz inorganique est l'azote gazeux ou le dioxyde de carbone gazeux.

**7.** Méthode selon la revendication 5 ou 6, dans laquelle le volume de la cavité après expansion de la cavité est de plus de 1,1 fois à 20 fois le volume de la cavité lors de l'achèvement du remplissage avec la composition de résine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1079686 A
- JP 2009074031 A
- JP 2009000964 A
- JP 2002192549 A
- JP 2011070019 A
- JP H0680813 B
- EP 1166991 A2
- JP 2008024919 A
- JP 2009161746 A
- JP 2009161745 A
- JP 2011006505 A
- JP 2011111614 A
- JP 2011189681 A
- JP 2011235371 A
- JP 2011236746 A